# EUROPEAN PATENT APPLICATION

(11) **EP 4 492 894 A1**
(43) Date of publication of application: **15.01.2025**
(21) Application number: 22930353.2
(22) Date of filing: 11.03.2022
(51) Int. Cl.: H04W 72/04

(54) **METHOD FOR DETERMINING TIME DOMAIN RESOURCE, TERMINAL DEVICE, AND NETWORK DEVICE**

(71) Applicant: GUANGDONG OPPO MOBILE TELECOMMUNICATIONS CORP., LTD., Dongguan, Guangdong 523860 (CN)
(72) Inventor: CUI, Shengjiang, Dongguan, Guangdong 523860 (CN)
(74) Representative: RGTH
(86) International application number: PCT/CN2022/080473
(87) International publication number: WO 2023/168715

(57) **Abstract**

A method for determining a time domain resource, a terminal device, and a network device are provided. The method includes: receiving, by a terminal device, first configuration information sent by a network device, where the first configuration information is used to configure, for the terminal device, a first time domain resource for performing backscatter communication. The network device may directly receive, on a first time domain resource, uplink data sent by a terminal device, avoiding a case in which the network device cannot learn a time domain resource for the terminal device to perform backscatter communication and therefore needs to continuously monitor time domain resources, which is conducive to reducing power consumption of the network device. In addition, the terminal device may perform backscatter communication based on the first time domain resource allocated by the network device, so as to avoid a resource collision or a resource conflict caused by the terminal device independently selecting a time domain resource for performing backscatter communication.

## Description

### TECHNICAL FIELD

This application relates to the field of communications technologies, and more specifically, to a method for determining a time domain resource, a terminal device, and a network device.

### BACKGROUND

In a zero-power communication process, if a terminal device has uplink data to be sent, the terminal device needs to independently select a time domain resource for performing backscatter communication, so as to transmit the uplink data. Since a network device cannot learn the time domain resource selected by the terminal device, the network device needs to continuously monitor time domain resources, so as to receive, in a timely manner, the uplink data sent by the terminal device. In such a transmission mechanism of uplink data, the network device needs to perform continuous monitoring, causing high power consumption of the network device. In addition, if a relatively large quantity of terminal devices are introduced to perform backscatter communication, and all the terminal devices independently select a time domain resource for performing backscatter communication, a probability of occurrence of time domain resource collisions or time domain resource conflicts is increased to some extent.

### SUMMARY

This application provides a method for determining a time domain resource, a terminal device, and a network device. This is conducive to reducing power consumption required for a network device to receive uplink data in backscatter communication. In addition, a resource collision or a resource conflict caused by a terminal device independently selecting a time domain resource for performing backscatter communication may be avoided.

According to a first aspect, a method for determining a time domain resource is provided, including: receiving, by a terminal device, first configuration information sent by a network device, where the first configuration information is used to configure, for the terminal device, a first time domain resource for performing backscatter communication.

According to a second aspect, a method for determining a time domain resource is provided, including: sending, by a network device, first configuration information to a terminal device, where the first configuration information is used to configure, for the terminal device, a first time domain resource for performing backscatter communication.

According to a third aspect, a terminal device is provided, including: a receiving unit, configured to receive first configuration information sent by a network device, where the first configuration information is used to configure, for the terminal device, a first time domain resource for performing backscatter communication.

According to a fourth aspect, a network device is provided, including: a sending unit, configured to send first configuration information to a terminal device, where the first configuration information is used to configure, for the terminal device, a first time domain resource for performing backscatter communication.

According to a fifth aspect, a terminal device is provided, including: a processor, a memory, and a communications interface. The memory is configured to store one or more computer programs, and the processor is configured to invoke the computer program in the memory to cause the terminal device to execute some or all of the steps in the method according to the first aspect.

According to a sixth aspect, a network device is provided, including: a processor, a memory, and a communications interface, where the memory is configured to store one or more computer programs, and the processor is configured to invoke the computer program in the memory to cause the network device to execute some or all of the steps in the method according to the second aspect.

According to a seventh aspect, an embodiment of this application provides a communications system, where the system includes the foregoing terminal device and/or network device. In another possible design, the system may further include another device that interacts with the terminal device or the network device in the solution provided in embodiments of this application.

According to an eighth aspect, an embodiment of this application provides a computer-readable storage medium. The computer-readable storage medium stores a computer program. The computer program causes a terminal to execute some or all of the steps in the method according to the first aspect.

According to a ninth aspect, an embodiment of this application provides a computer-readable storage medium, where the computer-readable storage medium stores a computer program, and the computer program causes a network device to execute some or all of the steps in the method according to the second aspect.

According to a tenth aspect, an embodiment of this application provides a computer program product. The computer program product includes a non-transitory computer-readable storage medium that stores a computer program. The computer program is operable to cause a terminal to execute some or all of the steps in the method according to the first aspect. In some implementations, the computer program product may be a software installation package.

According to an eleventh aspect, an embodiment of this application provides a computer program product, where the computer program product includes a non-transitory computer-readable storage medium that stores a computer program, and the computer program is operable to cause a network device to execute some or all of the steps in the method according to the second aspect. In some implementations, the computer program product may be a software installation package.

According to a twelfth aspect, an embodiment of this application provides a chip. The chip includes a memory and a processor. The processor may invoke a computer program from the memory and run the computer program, to implement some or all of the steps described in the method according to the first aspect or the second aspect.

A time domain resource (also referred to as a "first time domain resource") used for backscatter communication is configured for the terminal device by the network device. The network device may directly receive, on the first time domain resource, uplink data sent by the terminal device, avoiding a case in which the network device cannot learn a time domain resource for the terminal device to perform backscatter communication and therefore needs to continuously monitor time domain resources, which is conducive to reducing power consumption of the network device. In addition, the terminal device may perform backscatter communication based on the first time domain resource allocated by the network device, so as to avoid a resource collision or a resource conflict caused by the terminal device independently selecting a time domain resource for performing backscatter communication.

### BRIEF DESCRIPTION OF DRAWINGS

FIG. 1 is a schematic diagram of an architecture of a zero-power communications system 100 to which an embodiment of this application is applicable.
FIG. 2 is a schematic diagram of an energy harvesting module to which an embodiment of this application is applicable.
FIG. 3 is a schematic diagram of a principle of backscatter communication according to an embodiment of this application.
FIG. 4 is a circuit diagram of a terminal based on a resistor load modulation technology.
FIG. 5 is a schematic diagram of a time domain resource division manner according to an embodiment of this application.
FIG. 6 is a schematic diagram of a time domain resource division manner according to another embodiment of this application.
FIG. 7 is a flowchart of a method for determining a time domain resource according to an embodiment of this application.
FIG. 8 is a schematic diagram of a time domain location of a first time domain resource according to an embodiment of this application.
FIG. 9 is a schematic diagram of a time domain location of a first time domain resource according to another embodiment of this application.
FIG. 10 is a schematic diagram of a time domain location of a first time domain resource according to another embodiment of this application.
FIG. 11 is a schematic diagram of a time domain location of a first time domain resource according to another embodiment of this application.
FIG. 12 is a schematic diagram of a time domain location of a first time domain resource according to another embodiment of this application.
FIG. 13 is a schematic diagram of a time domain location of a first time domain resource according to another embodiment of this application.
FIG. 14 is a schematic diagram of a time domain location of a first time domain resource according to another embodiment of this application.
FIG. 15 is a schematic diagram of a time domain location of a first time domain resource according to another embodiment of this application.
FIG. 16 is a schematic diagram of a time domain location of a first time domain resource according to another embodiment of this application.
FIG. 17(a) is a schematic diagram of a time domain location of a first time domain resource according to another embodiment of this application.
FIG. 17(b) is a schematic diagram of a time domain location of a first time domain resource according to another embodiment of this application.
FIG. 18(a) is a schematic diagram of a time domain location of a first time domain resource according to another embodiment of this application.
FIG. 18(b) is a schematic diagram of a time domain location of a first time domain resource according to another embodiment of this application.
FIG. 19(a) is a schematic diagram of a time domain location of a first time domain resource according to another embodiment of this application.
FIG. 19(b) is a schematic diagram of a time domain location of a first time domain resource according to another embodiment of this application.
FIG. 20(a) is a schematic diagram of a time domain location of a first time domain resource according to another embodiment of this application.
FIG. 20(b) is a schematic diagram of a time domain location of a first time domain resource according to another embodiment of this application.
FIG. 21(a) is a schematic diagram of a time domain location of a first time domain resource according to another embodiment of this application.
FIG. 21(b) is a schematic diagram of a time domain location of a first time domain resource according to another embodiment of this application.
FIG. 22(a) is a schematic diagram of a time domain location of a first time domain resource according to another embodiment of this application.
FIG. 22(b) is a schematic diagram of a time domain location of a first time domain resource according to another embodiment of this application.
FIG. 23 is a schematic diagram of a time domain location of a first time domain resource according to another embodiment of this application.
FIG. 24 is a schematic diagram of a time domain location of a first time domain resource according to another embodiment of this application.
FIG. 25 is a schematic diagram of a time domain location of a first time domain resource according to another embodiment of this application.
FIG. 26 is a schematic diagram of a time domain location of a first time domain resource according to another embodiment of this application.
FIG. 27 is a schematic diagram of a time domain location of a first time domain resource according to another embodiment of this application.
FIG. 28 is a schematic diagram of a time domain location of control information according to an embodiment of this application.
FIG. 29 is a schematic diagram of a time domain location of control information according to another embodiment of this application.
FIG. 30 is a schematic diagram of a terminal device according to an embodiment of this application.
FIG. 31 is a schematic diagram of a network device according to an embodiment of this application.
FIG. 32 is a schematic structural diagram of a communications apparatus according to an embodiment of this application.

### DESCRIPTION OF EMBODIMENTS

The following describes the technical solutions in this application with reference to the accompanying drawings.

With the development of wireless communications technologies, it is expected to integrate a wireless communications system with various vertical industries such as logistics, manufacturing, transportation, and energy. For example, the wireless communications system may be integrated with an industrial wireless sensor network (industrial wireless sensor network, IWSN). For another example, the wireless communications system may be integrated with smart logistics and smart warehousing. For another example, the wireless communications system may be integrated with an intelligent home network.

However, in these industries, a terminal generally needs to have features such as a relatively low cost, a relatively small size (for example, an ultra-thin size), free maintenance, and a long service life. Therefore, to meet the foregoing conditions, a network device may communicate with a terminal by using a zero-power communication technology. In this case, the terminal may also be referred to as a "zero-power communication terminal".

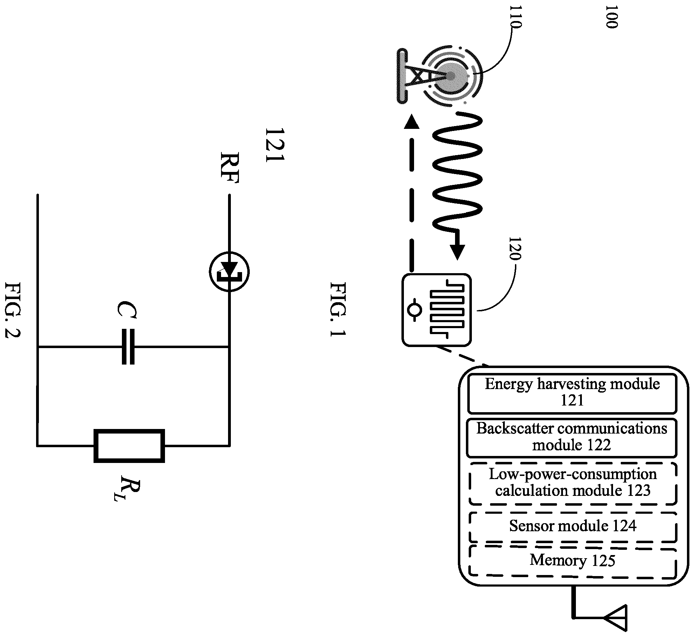

The zero-power communication technology and the zero-power terminal are described below with reference to FIG. 1 to FIG. 4. FIG. 1 shows an architecture of a zero-power communications system 100 to which an embodiment of this application is applicable. The architecture shown in FIG. 1 includes a network device 110 and a terminal device 120. The network device 110 may be a device that communicates with the terminal device 120. The network device 110 may provide communication coverage for a specific geographic area, and may communicate with the terminal device 120 located within the coverage.

The network device 110 is configured to send a wireless energy supply signal to the terminal device 120 to supply power to the terminal. Accordingly, the terminal device 120 may send data to the network device 110 by using a backscatter signal. In some implementations, the wireless energy supply signal may further carry data or control information to be sent by the network device 110 to the terminal device 120. Certainly, the wireless energy supply signal may be used only for energy supply, which is not limited in embodiments of this application.

It should be noted that FIG. 1 exemplarily shows one network device and one terminal. Optionally, the communications system 100 may include a plurality of network devices, and another quantity of terminal devices may be included within coverage of each network device, which is not limited in embodiments of this application.

In addition, in some implementations, the communications system 100 may further include another network entity such as a network controller or a mobility management entity. This is not limited in embodiments of this application.

It should be understood that the technical solutions of embodiments of this application may be applied to various communications systems, such as a 5th generation (5th generation, 5G) system or new radio (new radio, NR), a long-term evolution (long term evolution, LTE) system, an LTE frequency division duplex (frequency division duplex, FDD) system, LTE time division duplex (time division duplex, TDD), and a cellular Internet of Things. The technical solutions provided in this application may further be applied to a future communications system such as a 6th generation mobile communications system.

The terminal in embodiments of this application may also be referred to as user equipment (user equipment, UE), an access terminal, a subscriber unit, a subscriber station, a mobile site, a mobile station (mobile station, MS), a mobile terminal (mobile terminal, MT), a remote station, a remote terminal, a mobile device, a user terminal, a terminal device, a wireless communications device, a user agent, or a user apparatus. The terminal device in embodiments of this application may be a device providing a user with voice and/or data connectivity and capable of connecting people, objects, and machines, such as a household appliance having a wireless connection function, a sensor, or an electronic tag. The terminal in embodiments of this application may be a wireless terminal in a smart home (smart home), a zero-power terminal, a wireless terminal in an IWSN, a wireless terminal in smart logistics and smart warehousing, a wireless terminal in self driving (self driving), a wireless terminal in a remote medical surgery (remote medical surgery), a wireless terminal in a smart grid (smart grid), a wireless terminal in transportation safety (transportation safety), a wireless terminal in a smart city (smart city), or the like.

The network device in embodiments of this application may be a device configured to communicate with a terminal device. In a case that the terminal is an electronic tag, the network device may be a reader/writer (for example, a reader/writer based on a radio frequency identification (radio frequency identification, RFID) technology) that is configured to read and write the electronic tag. The network device may alternatively be an access network device or a radio access network device. For example, the network device may be a base station. The network device in embodiments of this application may be a radio access network (radio access network, RAN) node (or device) that connects the terminal device to a wireless network. The base station may broadly cover various names below, or may be replaced with the following names, such as a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a master MeNB, a secondary SeNB, a multi-standard radio (MSR) node, a home base station, a network controller, an access node, a wireless node, an access point (access point, AP), a transmission node, a transceiver node, a base band unit (base band unit, BBU), a remote radio unit (Remote Radio Unit, RRU), an active antenna unit (active antenna unit, AAU), a remote radio head (remote radio head, RRH), a central unit (central unit, CU), a distributed unit (distributed unit, DU), and a positioning node. The base station may be a macro base station, a micro base station, a relay node, a donor node, or the like, or a combination thereof. Alternatively, the base station may be a communications module, a modem, or a chip disposed in the device or apparatus described above. Alternatively, the base station may be a mobile switching center, a device that functions as a base station in device to device D2D, vehicle-to-everything (vehicle-to-everything, V2X), and machine-to-machine (machine-to-machine, M2M) communications, a network-side device in a 6G network, a device that functions as a base station in a future communications system, or the like. The base station may support networks of a same access technology or different access technologies. A specific technology and specific device form used by the network device are not limited in embodiments of this application.

The base station may be fixed or mobile. For example, a helicopter or an unmanned aerial vehicle may be configured to serve as a mobile base station, and one or more cells may move according to a location of the mobile base station. In other examples, a helicopter or an unmanned aerial vehicle may be configured to serve as a device in communication with another base station.

In some deployments, the network device in embodiments of this application may be a CU or a DU, or the network device includes a CU and a DU. The gNB may further include an AAU.

The network device and the terminal device may be deployed on land, including being indoors or outdoors, handheld, or vehicle-mounted, may be deployed on water, or may be deployed on a plane, a balloon, or a satellite in the air. In embodiments of this application, a scenario where the network device and the terminal device are located is not limited.

It should be understood that all or some of functions of the communications device in this application may also be implemented by software functions running on hardware, or by virtualization functions instantiated on a platform (for example, a cloud platform).

For ease of understanding the zero-power communication technology, zero-power communication and a terminal that supports the zero-power communication technology are described below with reference to FIG. 2 by using radio frequency identification (radio frequency identification, RFID) as an example.

RFID is a typical zero-power communication scenario. It may utilize spatial coupling of radio frequency signals to implement automatic transmission and identification of tag information without contact. Generally, in an RFID system, the terminal device (or a zero-power terminal) may be an electronic tag (TAG), and accordingly, the network device may be a reader/writer. The electronic tag is also referred to as a "radio frequency tag" or an "RFID tag", which includes a coupling component and a chip. Each electronic tag has a unique electronic code, which is placed on a target to be detected to mark a target object. The reader/writer can not only read information on the electronic tag, but also write information on the electronic tag, and provide the electronic tag with energy required for communication. Referring to FIG. 1, after entering an electromagnetic field, the electronic tag 120 may receive a radio frequency signal sent by the reader/writer 110. A passive electronic tag or a passivity electronic tag transmits information stored in the electronic tag 120 by using energy obtained from an electromagnetic field generated in space. The reader/writer 110 reads and decodes the information, so as to identify the electronic tag 120.

Key technologies for zero-power communication include energy harvesting, backscatter communication, and low-power-consumption calculation. The reader/writer 110 transmits radio waves to provide energy for the electronic tag 120. An energy harvesting module installed in the electronic tag 120 may harvest energy carried by a radio wave (a radio wave transmitted by the reader/writer, as shown in FIG. 1) in space, and the energy is used to drive a low-power-consumption calculation module of the electronic tag 120 and implement backscatter communication. After obtaining the energy, the electronic tag 120 may receive a control command from the reader/writer and send data to the reader/writer 110 in a backscatter manner according to the control signaling. The sent data may be from data stored in the electronic tag 120 (for example, an identity or pre-written information such as a production date, a brand, or a manufacturer of a commodity). The electronic tag 120 may also load various sensors, so as to report, based on a zero-power mechanism, data collected by the various sensors.

For ease of understanding, the zero-power terminal is described with continued reference to FIG. 1. Generally, a zero-power terminal 120 may include an energy harvesting module 121 and a backscatter communications module 122. The energy harvesting module 121 and the backscatter communications module 122 are described below with reference to FIG. 2 to FIG. 4. For brevity, details are not described here again. In some cases, the terminal device 120 may further include a low-power-consumption calculation module 123. The low-power-consumption calculation module 123 is configured to provide a calculation function, such as data processing, for the terminal. In some other cases, the terminal device 120 may further include a sensor 124, configured to collect external information (for example, ambient temperature, ambient humidity, and the like). In some other cases, the terminal device 120 may further include a memory 125, configured to store some information (for example, the external information collected by the foregoing sensor, or for example, an article identity, and the like).

The foregoing energy harvesting module 121 is configured to harvest energy. In some implementations, energy may be harvested by using a wireless energy supply signal sent by the network device. The wireless energy supply signal may be a "radio frequency signal" sent by the network device. Therefore, the foregoing energy harvesting module is also referred to as a "radio frequency energy harvesting module".

FIG. 2 shows a possible structure of the energy harvesting module. As shown in FIG. 2, the energy harvesting module 121 may harvest energy of a spatial electromagnetic wave of a radio frequency signal based on an electromagnetic induction principle, and store the harvested energy in a capacitor C, that is, a process of charging the capacitor C. After the process of charging the capacitor C is completed, the capacitor C may start to discharge, to supply energy to the terminal for operation. For example, the discharging of the capacitor C may be used to drive the terminal to demodulate, at low power consumption, data sent by the network device. For another example, the discharging of the capacitor C may be used to drive data to be sent by the terminal to be modulated. For another example, the discharging of the capacitor C may be used to drive a sensor of the terminal to collect data. For another example, the discharging of the capacitor C may be used to drive the terminal to read data in the memory 125.

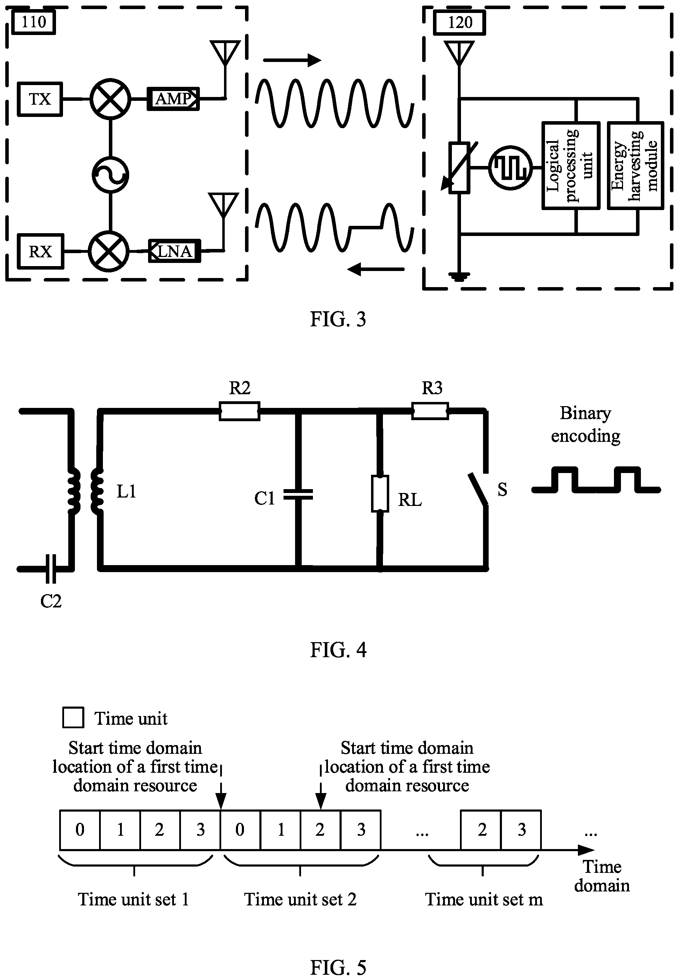

The foregoing backscatter communications module 122 is configured for the terminal to perform backscatter communication (back scattering) with the network device. A principle of the backscatter communication according to an embodiment of this application is described below with reference to FIG. 3. Referring to FIG. 3, the terminal device 120 receives a radio signal sent by the network device 110, and modulates the radio signal to load data that needs to be sent. Finally, the modulated signal is radiated from an antenna. This information transmission process is referred to as backscatter communication. The backscatter communication is inseparable from a load modulation function. The load modulation function may be understood as that a circuit parameter of an oscillation loop of the terminal is adjusted and controlled according to a beat of a data stream, such that parameters such as magnitude of impedance of the terminal change accordingly, thereby completing a modulation process.

In some implementations, another component, for example, an amplifier (amplifier, AMP) and the like, may further be provided on a transmitting (transport, TX) path of the network device 110, to process a signal to be sent. Another component, for example, a low noise amplifier (low noise amplifier, LNA) and the like, may further be provided on a receiving (receive, RX) path of the network device 110, to process a received signal.

In some other implementations, the terminal device 120 may be provided with an energy harvesting unit that is configured to harvest energy of a wireless energy supply signal sent by the network device. Certainly, the terminal device 120 may further be provided with a logical processing unit, to perform a corresponding calculation function.

It should be noted that, for either the network device 110 or the terminal device 120, FIG. 3 exemplarily shows only connection structures of signal processing circuits, and the processing circuit of the network device 110 and/or the processing circuit of the terminal device 120 may include other elements. This is not specifically limited in embodiments of this application.

Generally, the load modulation function may be implemented in two manners: resistor load modulation and capacitor load modulation. FIG. 4 is a circuit diagram of a terminal based on a resistor load modulation technology. It should be noted that a manner in which the circuit in FIG. 4 implements the load modulation technology is similar to a manner in which an existing circuit implements the load modulation technology. For brevity, functions of resistors R2 and R3, capacitors C1 and C2, and inductors L1 and L2 included in the circuit in FIG. 4 are not described again.

In resistor load modulation, a resistor RL may be connected in parallel to a load. A switch S may implement on/off of the resistor RL based on control of a binary data stream. In this way, on/off of the resistor RL causes a change in a voltage of the circuit, and the change in the voltage of the circuit may control amplitude of a backscatter signal from the terminal, so as to implement modulation of the backscatter signal, that is, amplitude-shift keying (amplitude-shift keying, ASK) modulation of the backscatter signal.

Similarly, in capacitor load modulation, on/off of a capacitor may be controlled based on a binary data stream, to change a resonance frequency of the circuit, so as to change an operating frequency of the backscatter signal, thereby implementing frequency-shift keying (frequency-shift keying, FSK) modulation.

As described above, the terminal may perform information modulation on a received signal (that is, the signal sent by the network device) through load modulation, to implement a backscatter communication process. Therefore, a terminal in backscatter communication generally have the following advantages.

Advantage 1: Since the terminal does not need to proactively transmit a signal, a complex radio frequency path does not need to be constructed. For example, components such as a power amplifier (power amplifier, PA) and a radio frequency filter may not be provided in the radio frequency path, so as to reduce a cost and a volume of the terminal.

Advantage 2: Since the terminal does not need to proactively generate a high-frequency signal, there is no need for a high-frequency crystal oscillator, so as to reduce a cost and a size of the terminal.

Advantage 3: Since the terminal may communicate with the network device by using the backscatter technology, less energy is consumed by the terminal during communication, or even no energy of the terminal needs to be consumed.

Currently, encoding methods commonly used in the zero-power communication technology include: non-return-to-zero (non return zero, NRZ) encoding, Manchester (manchester) encoding, unipolar return-to-zero (unipolar RZ) encoding, differential binary phase (differential binary phase, DBP) encoding, Miller (miller) encoding, differential encoding, and the like.

The communication process and the load modulation manner in the zero-power communication technology are described above with reference to FIG. 1 to FIG. 4. Based on the foregoing description of the zero-power communication technology, it may be learned that a terminal (also referred to as a "zero-power terminal") in zero-power communication consumes little energy of the terminal, or may even consume no energy of the terminal. Therefore, in the zero-power communication technology, based on energy sources and energy use manners of terminals, terminals may be classified into three categories: passive zero-power terminal, half-passive zero-power terminal, and active zero-power terminal.

### I . Passive zero-power terminal

A passive zero-power terminal generally does not require a built-in battery. When the terminal is close to a network device, the terminal is within coverage of a near field formed through radiation of an antenna of the network device. In this case, an antenna of the terminal may generate an induced current due to electromagnetic induction, and the induced current may supply power to the terminal, so as to implement demodulation of a received signal, and/or operations such as modulation and encoding of a signal to be transmitted. In some implementations, the foregoing passive zero-power terminal may be an electronic tag. Accordingly, the network device may be a reader/writer, configured to read content in the electronic tag and/or configured to change the content in the electronic tag, of a radio frequency identification (radio frequency identification, RFID) system.

### II. Half-passive zero-power terminal

No conventional battery is installed in the half-passive zero-power terminal, but radio wave energy may be harvested by using the energy harvesting module 121, and the harvested energy may be stored in an energy storage unit (such as a capacitor). After obtaining the energy, the energy storage unit may supply energy to the terminal, so as to implement demodulation of a received signal, and/or operations such as modulation and encoding of a signal to be transmitted.

### III. Active zero-power terminal

The active zero-power terminal may have a built-in battery. The battery may supply energy to the terminal, so as to implement demodulation of a received signal, and/or operations such as modulation and encoding of a signal to be transmitted. However, when the terminal device performs communication by using the backscatter technology, the terminal does not need to consume energy of the battery. Therefore, for such a terminal, "zero power consumption" is mainly reflected in a scenario where the terminal performs communication by using the backscatter technology.

In some implementations, the foregoing active zero-power terminal may be an electronic tag, and the network device may be an RFID reader/writer. In this case, the built-in battery may supply power to an RFID chip in the terminal, so as to increase a read/write distance between the RFID reader/writer and the electronic tag. In addition, the built-in battery may supply power to the RFID chip in the terminal, so as to shorten a read/write delay of the RFID reader/writer for the electronic tag, thereby helping to improve communication reliability.

It may be learned based on the foregoing description of the zero-power communications system that signals sent by the network device to the terminal device in the zero-power communications system are classified into an energy supply signal and a trigger signal. The foregoing two signals are described below in terms of signal carrier, frequency band, waveform, and the like.

For the energy supply signal, in terms of a signal carrier, the energy supply signal may be sent by a base station, a smartphone, a smart gateway, a charging station, a micro base station, or the like. In terms of a frequency band in which the signal is carried, a radio wave used for energy supply may be of low-frequency, intermediate-frequency, high-frequency, or the like. In terms of a waveform of the energy supply signal, the radio wave used for energy supply may be a sine wave, a square wave, a triangular wave, a pulse, a rectangular wave, or the like. In addition, the energy supply signal may be a continuous wave, or may be a discontinuous wave (that is, an interruption of specific time is allowed).

In some implementations, the foregoing energy supply signal may be a signal stipulated in a 3GPP standard, for example, a sounding reference signal (sounding reference signal, SRS), a physical uplink shared channel (physical uplink share channel, PUSCH), a physical random access channel (physical random access channel, PRACH), a physical uplink control channel (physical uplink control channel, PUCCH), a physical downlink control channel (physical downlink control channel, PDCCH), a physical downlink shared channel (physical downlink shared channel, PDSCH), a physical broadcast channel (physical broadcast channel, PBCH), or the like. Certainly, in some other implementations, the foregoing energy supply signal may alternatively be a new signal.

For the trigger signal, in terms of a signal carrier, the trigger signal may be sent by a base station, a smartphone, a smart gateway, or the like. In terms of a frequency band in which the signal is carried, a radio wave used for triggering may be of low-frequency, intermediate-frequency, high-frequency, or the like. In terms of a waveform of the trigger signal, the radio wave of the trigger signal may be a sine wave, a square wave, a triangular wave, a pulse, a rectangular wave, or the like. In addition, the trigger signal may be a continuous wave, or may be a discontinuous wave (that is, an interruption of specific time is allowed).

In some implementations, the trigger signal may be a signal stipulated in a 3GPP standard, for example, an SRS, a PUSCH, a PRACH, a PUCCH, a PDCCH, a PDSCH, a PBCH, or the like. Certainly, in some other implementations, the foregoing trigger signal may alternatively be a new signal.

Currently, in a zero-power communication process, if a terminal device has uplink data to be sent, the terminal device needs to independently select a time domain resource for performing backscatter communication, so as to transmit the uplink data. Accordingly, since a network device cannot learn the time domain resource selected by the terminal device, the network device needs to continuously monitor time domain resources, so as to receive, in a timely manner, the uplink data sent by the terminal device. In this uplink data transmission mechanism, the network device needs to continuously perform monitoring, causing high power consumption of the network device.

In addition, a quantity of terminal devices performing backscatter communication may be increased greatly, and if a relatively large quantity of terminal devices are introduced to perform backscatter communication, and all the terminal devices independently select a time domain resource for performing backscatter communication, a probability of occurrence of time domain resource collisions or time domain resource conflicts is increased to some extent. For example, if both a terminal device 1 and a terminal device 2 need to select a time domain resource for performing backscatter communication, since the terminal device 1 and the terminal device 2 are far away from each other, when the terminal device 1 selects a time domain resource for performing backscatter communication, the terminal device 1 may not be able to detect that the terminal device 2 is performing backscatter communication on a time domain resource 1. In this case, the terminal device 1 may consider that the time domain resource 1 is an idle time domain resource, and may also select the time domain resource 1 for performing backscatter communication, resulting in a collision between the time domain resource for the terminal device 1 to perform backscatter communication and the time domain resource for the terminal device 2 to perform backscatter communication.

To avoid the foregoing problem, this application provides a solution for determining a time domain resource, so as to configure, for a terminal device by a network device, a time domain resource (hereinafter referred to as a "first time domain resource") for backscatter communication. In this way, the network device may directly receive, on the first time domain resource, uplink data sent by the terminal device, avoiding a case in which the network device cannot learn a time domain resource for the terminal device to perform backscatter communication and therefore needs to continuously monitor time domain resources, which is conducive to reducing power consumption of the network device.

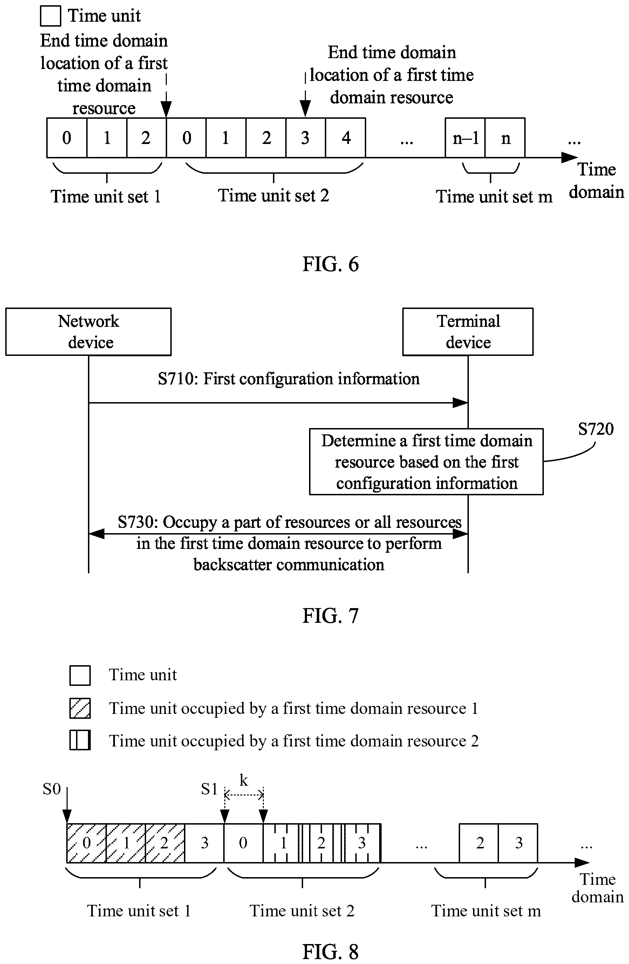

In addition, the network device allocates a time domain resource for performing backscatter communication to each terminal device within coverage of the network device. In this way, the network device may learn a time domain resource allocation situation of each terminal device within the coverage, and the network device may be prevented from allocating a same time domain resource to different terminal devices, so as to avoid a resource collision or a resource conflict between time domain resources for performing backscatter communication. A time domain resource division manner according to an embodiment of this application is first described below with reference to FIG. 5, and then a method for determining a time domain resource according to an embodiment of this application is described with reference to FIG. 7.

To simplify a process of determining a time domain resource for backscatter communication, the time domain resource may be divided into a plurality of time unit sets. In some implementations, the foregoing plurality of time unit sets each may further be divided into a plurality of time units.

The foregoing time unit set may also be referred to as a "time domain resource set", and may be used as a possible time domain resource allocation unit (or a time domain resource scheduling unit) in time domain. In some implementations, the unit of the time unit set may be microseconds, milliseconds, seconds, or the like. For example, a time length of the time unit set may be 10 ms. In some other implementations, the unit of the time unit set may be a timeslot, a subframe, a frame, or the like. For example, the time unit set may be one frame.

The foregoing time unit may also be referred to as a "time domain resource unit", and may be used as a possible time domain resource allocation unit (or a time domain resource scheduling unit) in time domain, for example, may be used as a basic time domain unit. In some implementations, the unit of the time unit may be microseconds, milliseconds, seconds, or the like. For example, a time length of the time unit may be 1 ms. In some other implementations, the unit of the time unit may be a timeslot, a subframe, a frame, or the like. For example, the time unit may be one timeslot.

In some implementations, the time unit may be used as a basic time domain unit (or a minimum scheduling unit) for time domain resource mapping and/or time domain resource allocation. Certainly, in some other examples, the time unit may further be subdivided into units of time, and the unit of time obtained through the subdivision may be used as a basic time domain unit. This is not limited in embodiments of this application.

In some other implementations, time units in each time unit set may be sequentially numbered, or each time unit in each time unit set correspond to an index. For example, time units in each time unit set may be numbered in ascending order according to a sequence from the earliest to the latest. For another example, time units in each time unit set may be numbered in descending order according to a sequence from the earliest to the latest.

For ease of distinction, the unit of time obtained through subdivision of the time unit is referred to as a "time domain division unit 1". In other words, the time unit may include one or more time domain division units 1, where the time domain division unit 1 may be, for example, a timeslot, a symbol, a subframe, or the like. In some implementations, time units may include a same quantity or different quantities of time domain division units 1. In some other implementations, a quantity of time domain division units 1 included in each time unit may be configured for a terminal device by a network device, may be pre-agreed upon by a network device and a terminal device, or may certainly be stipulated in a protocol. For example, in a case that the time domain division unit 1 is a timeslot, each time unit may include X timeslots, where X is a positive integer.

As described above, when time domain resources of a communications system are divided based on a time unit set, some time domain resources or all time domain resources in the communications system may be divided into a plurality of time unit sets. Generally, to simplify a time domain resource allocation process, a plurality of time unit sets may include a same quantity of time units. In some implementations, the time unit set and the time unit may be measured by absolute time length. For example, a time length of the time domain resource set is 10 milliseconds, and a time length of the time unit is one millisecond. Accordingly, each time domain resource set includes 10 time units. For another example, a time length of the time unit set is one frame, and a time length of the time unit is one subframe. Accordingly, each time domain resource set includes 10 time units. Certainly, to improve flexibility of time domain resource division, some or all of time units in a plurality of time unit sets may include different quantities of time units.

FIG. 5 is a schematic diagram of a time domain resource division manner according to an embodiment of this application. Referring to FIG. 5, a time domain resource in a communications system includes m time unit sets, namely a time unit set 1, a time unit set 2, ..., and a time unit set m. Each of the time unit sets includes four time units, namely time units 0 to 3, where m is a natural number.

FIG. 6 is a schematic diagram of a time domain resource division manner according to another embodiment of this application. Referring to FIG. 6, a time domain resource in a communications system includes m time unit sets, namely a time unit set 1, a time unit set 2, ..., and a time unit set m. Time units included in the time unit set 1 are time units 0 to 2, time units included in the time unit set 2 are time units 0 to 4, ..., and time units included in the time unit set m are time units (n-1) to n, where m is a natural number, and n is a positive integer greater than 1. In other words, the m time unit sets include different quantities of time units.

It should be noted that, for ease of description, in the resource division manners shown in FIG. 5 and FIG. 6, indexes of time units in each time unit set are sequentially numbered starting from 0. In some other cases, indexes of time units in each time unit set are sequentially numbered starting from 1. This is not limited in embodiments of this application.

As described above, one time unit set may include one or more time units. Certainly, in some implementations, another unit of time, for example, a time domain division unit 2, may alternatively be between the two units of time: the time unit set and the time unit. In other words, the time unit set may include one or more time domain division units 2, and one time domain division unit 2 may include one or more time units. A time length of the time domain division unit 2 may be a subframe, a timeslot, or the like.

For example, a time length of the time unit set may be a frame, a time length of the time domain division unit 2 may be a subframe, and a time length of the time unit may be a timeslot. In this case, one time unit set may include 10 time domain division units 2, and one time domain division unit 2 may include one time unit.

It should be noted that, to simplify a time domain resource allocation process, a quantity of time domain division units 2 included in each time unit set and a quantity of time units included in each time domain division unit 2 may be fixed. Certainly, to improve flexibility of time domain resource allocation, a quantity of time domain division units 2 included in each time unit set and/or a quantity of time units included in each time domain division unit 2 may vary.

In addition, the foregoing quantity of time domain division units 2 included in each time unit set and/or quantity of time units included in each time domain division unit 2 may be configured for the terminal device by the network device, for example, may be configured for the terminal device by the network device in a semi-static manner or a dynamic indication manner. Certainly, in embodiments of this application, the foregoing quantity of time domain division units 2 included in each time unit set and/or quantity of time units included in each time domain division unit 2 may be pre-agreed upon by the network device and the terminal device, for example, may be pre-agreed upon by using a protocol.

As described above, each time unit set may include one or more time units. In this case, a quantity of time units included in each time unit set may be stipulated in a protocol, or may be pre-agreed upon by the network device and the terminal device. Certainly, the quantity of time units included in each time unit set may alternatively be configured for the terminal device by the network device. In some implementations, the network device may directly configure, for the terminal device, a quantity of time units included in a time unit set. In some other implementations, the network device and the terminal device may pre-agree upon candidate quantities of a plurality of time units, and then the network device may indicate an effective quantity, of time units, in the candidate quantities of the plurality of time units to the terminal device.

The time domain resource division manners to which embodiments of this application are applicable are described above with reference to FIG. 5 and FIG. 6. A flowchart of the method for determining a time domain resource according to an embodiment of this application is described below with reference to FIG. 7. The method shown in FIG. 7 includes step S710. It should be understood that the method shown in FIG. 7 may be used in combination with the various time domain resource division manners described above. Certainly, the method shown in FIG. 7 may also be applied to another time domain resource division manner, which is not limited in embodiments of this application.

In step S710, a network device sends first configuration information to a terminal device.

The foregoing first configuration information is used to configure, for the terminal device, a first time domain resource for performing backscatter communication. The first configuration information may be carried in control information for the backscatter communication. Certainly, the foregoing first configuration information may alternatively be signalling independent of the control information for the backscatter communication. In some implementations, the first configuration information may be dynamically configured signalling, for example, downlink control information (downlink control information, DCI). For another example, the first configuration information may alternatively be semi-statically configured signalling, such as radio resource control (radio resource control, RRC) signalling. This is not specifically limited in embodiments of this application.

In some implementations, the foregoing first configuration information is used to configure one or more of following information for the terminal device: a start time domain location of the first time domain resource, an end time domain location of the first time domain resource, and duration of the first time domain resource.

The duration of the foregoing first time domain resource may be represented by a quantity of time units. For example, the duration of the first time domain resource may be two time units. It should be noted that the duration of the foregoing first time domain resource may be predefined, for example, may be predetermined by using a communication protocol. The duration of the foregoing first time domain resource may alternatively be preconfigured, for example, preconfigured for the terminal device by the network device. This is not specifically limited in embodiments of this application.

It should be noted that the network device may determine the duration of the first time domain resource based on an amount of data that the terminal device needs to transmit through backscatter communication. Certainly, if an amount of data to be transmitted by the terminal device through backscatter communication is relatively fixed, the network device may alternatively determine the duration of the first time domain resource based on an amount of data historically transmitted by the terminal device. This is not limited in embodiments of this application.

The start time domain location of the foregoing first time domain resource may be understood as a start location of the first time domain resource in time domain. In some implementations, the start time domain location of the first time domain resource may be represented by a time unit set and a time unit. For example, referring to FIG. 5, the start time domain location of the first time domain resource may be the time unit 2 in the time unit set 2. In some other implementations, the start time domain location of the first time domain resource may be represented by a boundary location of a time unit set in time domain. For example, referring to FIG. 5, the start time domain location of the first time domain resource may be represented as a start location of the time unit set 2. This is not specifically limited in embodiments of this application.

The end time domain location of the first time domain resource may be understood as an end location of the first time domain resource in time domain. In some implementations, the end time domain location of the first time domain resource may be represented by a time unit set and a time unit. For example, continuing to refer to FIG. 6, the end time domain location of the first time domain resource may be the time unit 3 in the time unit set 2. In some other implementations, the end time domain location of the first time domain resource may be represented by a boundary location of a time unit set in time domain. For example, continuing to refer to FIG. 6, the end time domain location of the first time domain resource may be represented as an end location of the time unit set 1. This is not specifically limited in embodiments of this application.

In addition, a time domain location of a first time unit set involved above may include a start time domain location of the first time unit set or an end time domain location of the first time unit set. Certainly, the time domain location of the first time unit set may alternatively be any time domain location of the first time unit set, for example, may be a time domain location of any time unit in the first time unit set. For another example, the time domain location of the first time unit set may alternatively be an intermediate time domain location of the first time unit set. The time domain location of the first time unit set is not specifically limited in embodiments of this application.

A time domain location of a time domain resource occupied by the control information mentioned above may include a start time domain location of the time domain resource occupied by the control information or an end time domain location of the time domain resource occupied by the control information. Certainly, the time domain location of the time domain resource occupied by the control information may alternatively be any time domain location of the time domain resource occupied by the control information, for example, may be a time domain location of any time unit in the time domain resource occupied by the control information. For another example, the time domain location of the time domain resource occupied by the control information may be a time domain location of any time unit in a time unit set in which the time domain resource occupied by the control information is located. For another example, the time domain location of the time domain resource occupied by the control information may alternatively be an intermediate time domain location of a time unit set in which the time domain resource occupied by the control information is located. For another example, the time domain location of the time domain resource occupied by the control information may alternatively be a start time domain location or an end time domain location of a time unit set in which the time domain resource occupied by the control information is located. The time domain location of the time domain resource occupied by the foregoing control information is not specifically limited in embodiments of this application.

In step S720, the terminal device determines a first time domain resource based on the first configuration information.

In step S730, the terminal device occupies a part of resources or all resources in the first time domain resource to perform backscatter communication.

In some implementations, a time domain location of the foregoing first time domain resource may be determined based on a reference time domain location. In some cases, the reference time domain location may be a time domain location of the first time unit set, or the reference time domain location may be a location of the first time unit set in time domain. Some or all time units included in the first time domain resource belong to the first time unit set. In some other cases, the reference time domain location may alternatively be the time domain location of the time domain resource occupied by the control information in backscatter communication (hereinafter referred to as "control information"). A method for determining the time domain location of the first time domain resource based on the reference time domain location is described below with reference to FIG. 8 to FIG. 27. Certainly, in embodiments of this application, the time domain location of the foregoing first time domain resource may alternatively be directly carried in the first configuration information, without being determined based on the reference time domain location. This is not limited in embodiments of this application.

It should be noted that the foregoing reference time domain location may be configured for the terminal device by the network device by using the first configuration information. In some implementations, the first configuration information may include first indication information, and the first indication information is used to indicate the reference time domain location. The reference time domain location is used to determine the time domain location of the first time domain resource.

A method for determining the start time domain location of the first time domain resource is described below with reference to a determining manner 1 to a determining manner 3 by using an example in which the reference time domain location is the time domain location of the first time unit set.

Determining manner 1: In a case that the time domain location of the first time unit set is the start time domain location of the first time unit set, the start time domain location of the first time domain resource may be determined based on the start time domain location of the first time unit set. In some implementations, the start time domain location of the first time unit set may be directly determined as the start time domain location of the first time domain resource. In some other implementations, the start time domain location of the first time domain resource may be determined based on the start time domain location of the first time unit set and a time unit offset value k. In other words, the start time domain location of the first time domain resource is obtained by shifting, by k time units, from the start time domain location of the first time unit set as a starting point.

Determining manner 2: In a case that the time domain location of the first time unit set is the end time domain location of the first time unit set, the start time domain location of the first time domain resource may be determined based on the end time domain location of the first time unit set. In some implementations, the end time domain location of the first time unit set may be directly determined as the start time domain location of the first time domain resource. In some other implementations, the start time domain location of the first time domain resource may be determined based on the end time domain location of the first time unit set and a time unit offset value p. In other words, the start time domain location of the first time domain resource is obtained by shifting, by p time units, from the end time domain location of the first time unit set as a starting point.

Determining manner 3: In a case that the time domain location of the first time unit set is any time unit (hereinafter referred to as a "first time unit") in the first time unit set, the start time domain location of the first time domain resource may be determined based on a time domain location (for example, a start time domain location or an end time domain location) of the first time unit. In some implementations, the time domain location of the first time unit may be directly determined as the start time domain location of the first time domain resource. In some other implementations, the start time domain location of the first time domain resource may be determined based on the time domain location of the first time unit and a time unit offset value q. In other words, the start time domain location of the first time domain resource is obtained by shifting, by q time units, from the time domain location of the first time unit as a starting point.

A method for determining the end time domain location of the first time domain resource is described below with reference to a determining manner 4 to a determining manner 6 by using an example in which the reference time domain location is the time domain location of the first time unit set.

Determining manner 4: In a case that the time domain location of the first time unit set is the start time domain location of the first time unit set, the end time domain location of the first time domain resource may be determined based on the start time domain location of the first time unit set. In some implementations, the start time domain location of the first time unit set may be directly determined as the end time domain location of the first time domain resource. In some other implementations, the end time domain location of the first time domain resource may be determined based on the start time domain location of the first time unit set and a time unit offset value k' . In other words, the end time domain location of the first time domain resource is obtained by shifting, by k' time units, from the start time domain location of the first time unit set as a starting point.

Determining manner 5: In a case that the time domain location of the first time unit set is the end time domain location of the first time unit set, the end time domain location of the first time domain resource may be determined based on the end time domain location of the first time unit set. In some implementations, the end time domain location of the first time unit set may be directly determined as the end time domain location of the first time domain resource. In some other implementations, the end time domain location of the first time domain resource may be determined based on the end time domain location of the first time unit set and a time unit offset value p'. In other words, the end time domain location of the first time domain resource is obtained by shifting, by p' time units from the end time domain location of the first time unit set as a starting point.

Determining manner 6: In a case that the time domain location of the first time unit set is any time unit (hereinafter referred to as a "third time unit") in the first time unit set, the end time domain location of the first time domain resource may be determined based on a time domain location (for example, a start time domain location or an end time domain location) of the third time unit. In some implementations, the time domain location of the third time unit may be directly determined as the end time domain location of the first time domain resource. In some other implementations, the end time domain location of the first time domain resource may be determined based on the time domain location of the third time unit and a time unit offset value q'. In other words, the end time domain location of the first time domain resource is obtained by shifting, by q' time units, from the time domain location of the first time unit as a starting point.

It should be noted that the shifting involved in the foregoing determining manners 1 to 6 may be understood as shifting in a direction from the earliest to the latest in time domain, or shifting in a direction from the latest to the earliest in time domain, which is not limited in embodiments of this application.

In addition, in a case that the end time domain location, of the first time domain resource, determined by the terminal device based on the first configuration information is earlier than a start time domain location of a time domain resource occupied by the first configuration information, generally, to reserve enough time for the terminal device to process the first configuration information or generate data to be transmitted, in this case, the terminal device may be configured to perform backscatter communication in a target time unit set by default, where the target time unit set may be an adjacent time unit set next to a time unit set that carries the first configuration information. Certainly, the target time unit may alternatively be any time unit set that is located after the time unit set that carries the first configuration information.

In embodiments of this application, any two or all of the foregoing determining manner of the start time domain location of the first time domain resource, the determining manner of the end time domain location of the first time domain resource, and the determining manner of the duration of the first time domain resource may be used in combination with each other.

For ease of understanding, the foregoing determining manners 1 to 3 are described below with reference to FIG. 8 to FIG. 10 by using an example in which a resource division manner is as shown in FIG. 5 and duration of the first time unit is a preset value. It should be noted that the foregoing determining manners 1 to 3 may also be applicable to a case in which duration of the first time unit is dynamically indicated, and/or a case in which a resource division manner is as shown in FIG. 6, where manners of determining the time domain location of the first time domain resource in the cases are similar. For brevity, details are not described below again. In addition, in a following solution involving shifting, if not emphasized, a shifting direction of the shifting defaults to a direction of shifting from the earliest to the latest.

Referring to FIG. 8, it is assumed that the terminal device and the network device pre-agree upon that duration of a first time domain resource 1 is three time units, the first time unit set is a time unit set 1, and a start time domain location (that is, a reference time domain location S0) of the time unit set 1 is a start time domain location of a time unit 0. It may be learned based on the foregoing determining manner 1 that a start time domain location of the first time domain resource 1 is the start time domain location of the time unit 0 in the time unit set 1, and time units, in the time unit set 1, occupied by the first time domain resource are the time unit 0, a time unit 1, and a time unit 2.

Continuing to refer to FIG. 8, it is assumed that the terminal device and the network device pre-agree upon that duration of a first time domain resource 2 is three time units, the first time unit set is a time unit set 2, a start time domain location (that is, a reference time domain location S1) of the time unit set 2 is a start time domain location of a time unit 0, and an offset k is 1. It may be learned based on the foregoing determining manner 1 that a start time domain location of the first time domain resource 2 is a start time domain location of a time unit 1 in the time unit set 2, and time units, in the time unit set 2, occupied by the first time domain resource 2 are the time unit 1, a time unit 2, and a time unit 3.

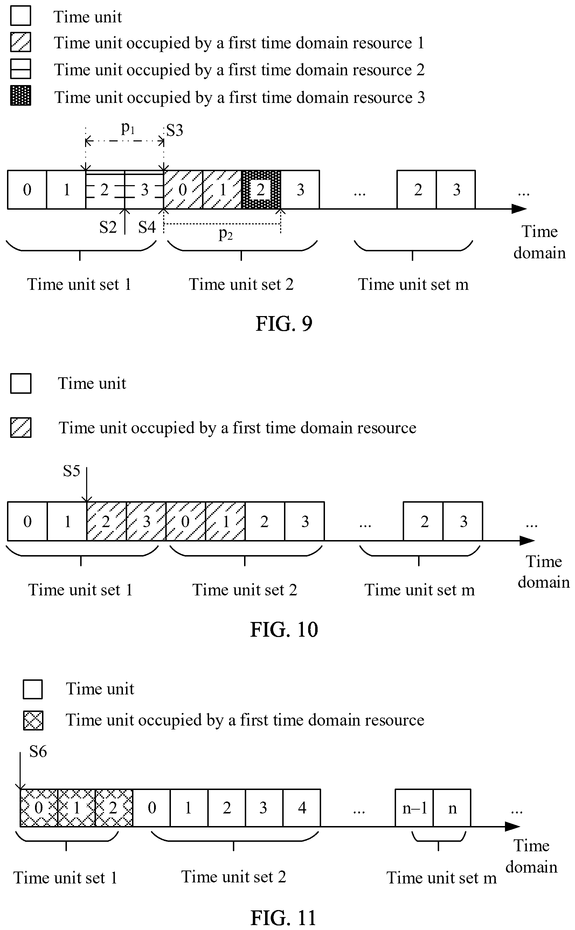

Referring to FIG. 9, it is assumed that the terminal device and the network device pre-agree upon that duration of a first time domain resource 1 is two time units, the first time unit set is a time unit set 1, and an end time domain location (that is, a reference time domain location S2) of the time unit set 1 is an end time domain location of a time unit 3. It may be learned based on the foregoing determining manner 2 that a start time domain location of the first time domain resource 1 is the end time domain location of the time unit 3 in the time unit set 1, and time units occupied by the first time domain resource 1 are a time unit 0 and a time unit 1 in a time unit set 2.

Continuing to refer to FIG. 9, it is assumed that the terminal device and the network device pre-agree upon that duration of a first time domain resource 2 is two time units, the first time unit set is a time unit set 1, an end time domain location (that is, a reference time domain location S3) of the time unit set 1 is an end time domain location of a time unit 3, an offset pi is 1, and a shifting direction is a direction from the latest to the earliest in time domain. It may be learned based on the foregoing determining manner 2 that a start time domain location of the first time domain resource 2 is obtained by shifting, by two time units in a direction from the latest to the earliest in time domain, from the end time domain location of the time unit 3 in the time unit set 1 as a starting point. Therefore, time units occupied by the first time domain resource 2 are a time unit 2 and a time unit 3 in the time unit set 1.

Continuing to refer to FIG. 9, it is assumed that the terminal device and the network device pre-agree upon that duration of a first time domain resource 3 is one time unit, the first time unit set is a time unit set 1, an end time domain location (that is, a reference time domain location S4) of the time unit set 1 is an end time domain location of a time unit 3, an offset p₂ is 3, and a shifting direction is a direction from the earliest to the latest in time domain. It may be learned based on the foregoing determining manner 2 that a start time domain location of the first time domain resource 3 is obtained by shifting, by three time units in a direction from the earliest to the latest in time domain, from the end time domain location of the time unit 3 in the time unit set 1 as a starting point. Therefore, a time unit occupied by the first time domain resource 3 is a time unit 2 in a time unit set 2.

Referring to FIG. 10, it is assumed that the terminal device and the network device pre-agree upon that the duration of the first time domain resource is four time units, the first time unit set is a time unit set 1, and the foregoing first time unit (that is, a reference time domain location S5) is a start time domain location of a time unit 2. It may be learned based on the foregoing determining manner 3 that a start time domain location of the first time domain resource is a start time domain location of a time unit 2, and time units occupied by the first time domain resource are a time unit 2 and a time unit 3 in the time unit set 1, and a time unit 0 and a time unit 1 in a time unit set 2.

For ease of understanding, the foregoing determining manners 4 to 6 are described below with reference to FIG. 11 to FIG. 13 by using an example in which a resource division manner is as shown in FIG. 6 and duration of the first time unit is a preset value. It should be noted that the foregoing determining manners 4 to 6 may also be applicable to a case in which duration of the first time unit is dynamically indicated, and/or a case in which a resource division manner is as shown in FIG. 5, where manners of determining the time domain location of the first time domain resource are similar in the cases. For brevity, details are not described below again.

Referring to FIG. 11, it is assumed that the terminal device and the network device pre-agree upon that the duration of the first time domain resource is three time units, the first time unit set is a time unit set 2, and a start time domain location (that is, a reference time domain location S6) of the time unit set 2 is a start time domain location of a time unit 0. It may be learned based on the foregoing determining manner 4 that an end time domain location of the first time domain resource is the start time domain location of the time unit 0 in the time unit set 2, and time units occupied by the first time domain resource are a time unit 0, a time unit 1, and a time unit 2 in a time unit set 1.

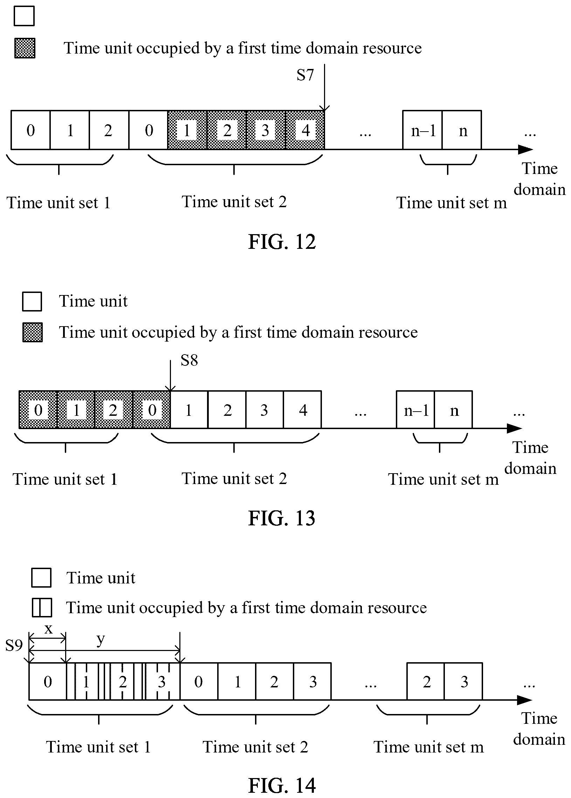

Referring to FIG. 12, it is assumed that the terminal device and the network device pre-agree upon that the duration of the first time domain resource is four time units, the first time unit set is a time unit set 2, and an end time domain location (that is, a reference time domain location S7) of the time unit set 2 is an end time domain location of a time unit 4. It may be learned based on the foregoing determining manner 5 that an end time domain location of the first time domain resource is the end time domain location of the time unit 4 in the time unit set 2, and time units occupied by the first time domain resource are a time unit 1, a time unit 2, a time unit 3, and the time unit 4 in the time unit set 2.

Referring to FIG. 13, it is assumed that the terminal device and the network device pre-agree upon that the duration of the first time domain resource is four time units, the first time unit set is a time unit set 2, and the foregoing third time unit (that is, a reference time domain location S8) is a start time domain location of a time unit 1 in the time unit set 2. It may be learned based on the foregoing determining manner 6 that an end time domain location of the first time domain resource is the start time domain location of the time unit 1 in the time unit set 2, and time units occupied by the first time domain resource are a time unit 0, a time unit 1, and a time unit 2 in a time unit set 1, and a time unit 0 in the time unit set 2, where the time units occupied by the first time domain resource are distributed in the time unit set 1 and the time unit set 2.

The manners of determining the first time domain resource are described above by using the time domain location of the first time domain resource and the duration of the first time domain resource as an example. A manner of determining the first time domain resource is described below by using an example in which this manner is based on the start time domain location of the first time domain resource and the end time domain location of the first time domain resource.

As described above, in some cases, all time units occupied by the first time domain resource may belong to a same time unit set. In some other cases, time units occupied by the first time domain resource may be distributed in different time unit sets. Therefore, in embodiments of this application, the time domain location of the first time unit set may be used as a reference time domain location, to indicate the start time domain location of the first time domain resource and/or the end time domain location of the first time domain resource. A determining manner 7 of the first time domain resource is described below based on the foregoing different indication manners.

Indication manner 1: In a case that time units occupied by the first time domain resource belong to a same time unit set, the start time domain location of the first time domain resource and the end time domain location of the first time domain resource may be both determined based on the time domain location of the first time unit set. In some implementations, the start time domain location of the first time domain resource and the end time domain location of the first time domain resource may be determined by shifting, by an offset x and an offset y in terms of time units respectively, from the time domain location of the first time unit set as a start location, where the offset x is used to determine the start time domain location of the first time domain resource, and the offset y is used to determine the end time domain location of the first time domain resource. Certainly, in some other implementations, the start time domain location of the first time domain resource and the end time domain location of the first time domain resource may also be represented by indexes of time units. This is not specifically limited in embodiments of this application.

It should be noted that the foregoing offset x and/or offset y may be represented by a quantity of time units. Certainly, the foregoing offset x and/or offset y may alternatively be represented by a specific time length, which is not limited in embodiments of this application.

In addition, the foregoing offset x and offset y may be offsets in time domain locations in a direction from the earliest to the latest, or the foregoing offset x and offset y may be offsets in time domain locations in a direction from the latest to the earliest. This is not limited in embodiments of this application.

For example, the resource division manner is as shown in FIG. 5 and a reference time domain location S9 is a start time domain location of a first time unit set. It is assumed that the first time unit set is a time unit set 1, a start time domain location of the first time unit set is a start time domain location of a time unit 0, the offset x is one time unit, and the offset y is three time units. Therefore, referring to FIG. 14, the start time domain location of the first time domain resource is a time unit 1 in the time unit set 1, and the end time domain location of the first time domain resource is a time unit 3. Referring to FIG. 14, it is determined based on the determining manner 7 that time units occupied by the first time domain resource are the time unit 1, a time unit 2, and a time unit 3 in the time unit set 1.

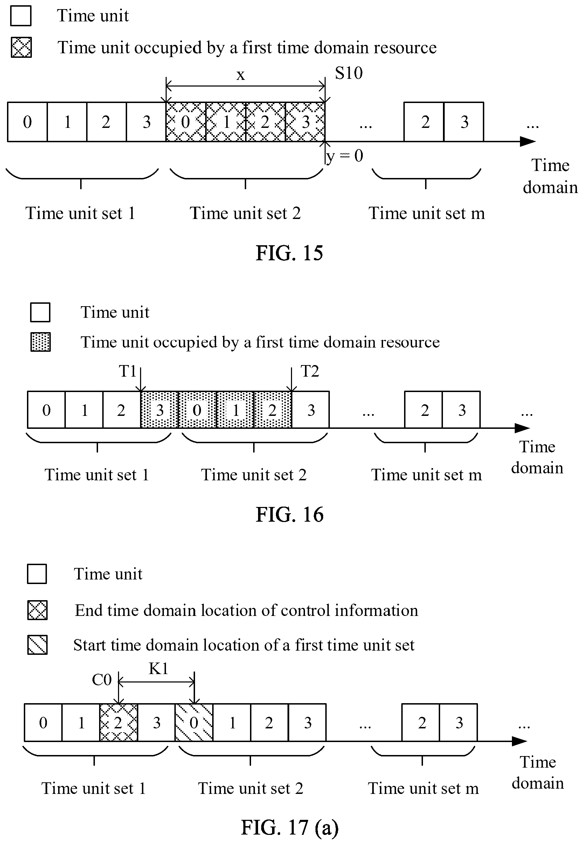

For another example, the resource division manner is as shown in FIG. 5 and a reference time domain location S 10 is an end time domain location of a first time unit set. It is assumed that the first time unit set is a time unit set 2, an end time domain location of the first time unit set is an end time domain location of a time unit 3, a shifting direction is from the latest to the earliest, the offset x is three time units, and the offset y is zero time unit. Referring to FIG. 15, the start time domain location of the first time domain resource is a time unit 0 in a time unit set 2, and the end time domain location of the first time domain resource is a time unit 3 in the time unit set 2. It is determined based on the determining manner 7 that time units occupied by the first time domain resource are the time unit 0, a time unit 1, a time unit 2, and the time unit 3 in the time unit set 2.

Indication manner 2: In a case that time units occupied by the first time domain resource do not belong to a same time unit set, the start time domain location of the first time domain resource may be determined based on a time domain location of a first time unit set, and the end time domain location of the first time domain resource may be indicated by the time unit set in combination with a time unit. Certainly, the end time domain location of the first time domain resource may be determined based on the time domain location of the first time unit set, and the start time domain location of the first time domain resource may be indicated by the time unit set in combination with a time unit.

In an implementation, assuming that the first configuration information indicates the start time domain location of the first time domain resource by using the first indication information, second indication information may be carried in the first configuration information, to indicate the end time domain location of the first time domain resource. The second indication information may indicate a time unit set and a time unit where the end time domain location of the first time domain resource resides.

For example, the resource division manner is as shown in FIG. 5. It is assumed that a first time unit set is a time unit set 1, a time domain location T1 indicated by the first indication information is a time unit 3 in the time unit set 1, and a time domain location T2 indicated by the second indication information is a time unit 2 in a time unit set 2. Referring to FIG. 16, it is determined based on the determining manner 7 that time units occupied by the first time domain resource are the time unit 3 in the time unit set 1, and a time unit 0, a time unit 1, and the time unit 2 in the time unit set 2.

The method for determining the first time domain resource based on the first time unit set is described above with reference to FIG. 5 to FIG. 16. A method for determining the time domain location of the first time unit set to which an embodiment of this application is applicable is described below.

In some implementations, the time domain location of the first time unit set may be determined based on a first offset value, where the first offset value may be a value of an offset between the time domain location of the first time unit set and a pre-agreed time domain resource location. In some implementations, the foregoing offset value may be represented by a quantity of time units or by a quantity of time unit sets. In some other implementations, the foregoing offset value may alternatively be represented by a quantity of time domain division units 2, which is not limited in embodiments of this application.

It should be noted that the foregoing offset value may further correspond to a shifting direction, where the shifting direction may be a direction of shifting from the earliest to the latest in time domain, or a direction of shifting from the latest to the earliest in time domain, which is not limited in embodiments of this application.

In embodiments of this application, the foregoing first offset value may alternatively be preset. In this case, the first indication information may not indicate the foregoing first offset value. In addition, in some implementations, a preset value of the first offset value may be 0. Certainly, the preset value of the first offset value may alternatively be any value, which is not limited in embodiments of this application.

The foregoing pre-agreed time domain resource location may be a time domain location of a time domain resource that carries control information in backscatter communication (hereinafter referred to as a "time domain location of the control information"), where the time domain location of the control information may be, for example, one of a start time domain location of the time domain resource that carries the control information (also referred to as a "start time domain location of the control information"), a start time domain location of a time unit set in which the time domain resource that carries the control information is located, an end time domain resource location of the time domain resource that carries the control information (also referred to as an "end time domain location of the control information"), an end time domain resource location of the time unit set in which the time domain resource that carries the control information is located, and any time domain location of the time domain resource that carries the control information.

Determination of the time domain location of the first time unit set based on the end time domain location of the control information is described below by using the resource division manner shown in FIG. 5 as an example. It should be noted that the foregoing method for determining the time domain location of the first time unit set may also be combined with the resource division manner shown in FIG. 6. For brevity, details are not described here again. In addition, in a following solution involving shifting, if not specifically emphasized, a shifting direction may default to a direction of shifting from the earliest to the latest.

Assuming that an end time domain location C0 of the control information is a time unit 2 in a time unit set 1, and a first offset value K1 is 2, the start time domain location of the first time unit set may be a time unit set in which a target time unit obtained by shifting, by two time units, from the time unit 2 in the time unit set 1 as a start location is located. Referring to FIG. 17(a), a target time unit obtained by shifting, by two time units, from a time unit 2 in a time unit set 1 as a start location is a time unit 0 in a time unit set 2. Therefore, the start time domain location of the first time unit set is the time unit 0 in the time unit set 2.

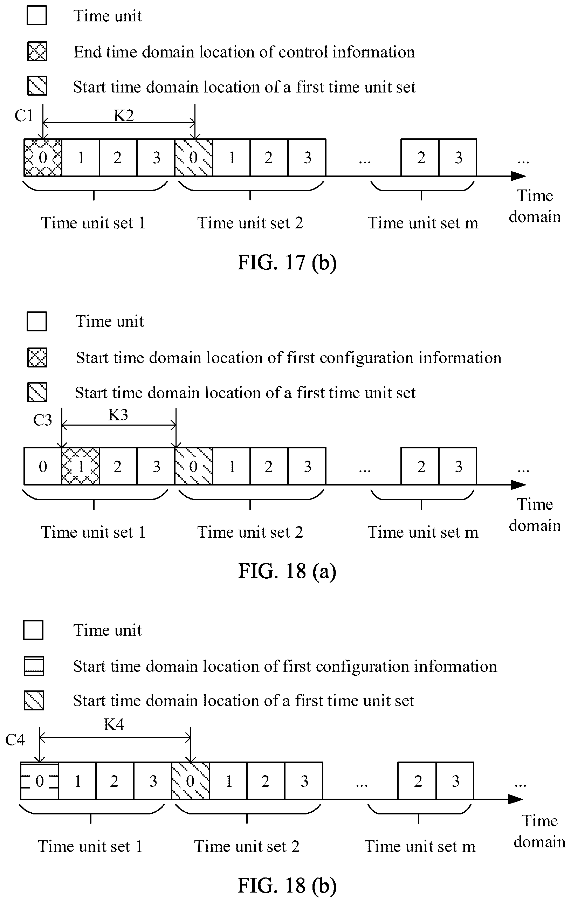

Assuming that an end time domain location C 1 of the control information is a time unit 0 in a time unit set 1, and a first offset value K2 is one time unit set, the start time domain location of the first time unit set may be a target time unit obtained by shifting, by one time unit set, from the time unit 0 in the time unit set 1 as a start location. Referring to FIG. 17(b), a target time unit obtained by shifting, by one time unit set, from a time unit 0 in a time unit set 1 as a start location is a time unit 0 in a time unit set 2. Therefore, the start time domain location of the first time unit set is the time unit 0 in the time unit set 2.

Alternatively, the foregoing pre-agreed time domain resource location may be a time domain location of a time domain resource that carries the first configuration information (hereinafter referred to as a "time domain location of the first configuration information"), where the time domain location of the first configuration information may be, for example, one of a start time domain location of the time domain resource that carries the first configuration information (also referred to as a "start time domain location of the first configuration information"), a start time domain location of a time unit set in which the time domain resource that carries the first configuration information is located, an end time domain resource location of the time domain resource that carries the first configuration information (also referred to as an "end time domain location of the first configuration information"), an end time domain location of the time unit set in which the time domain resource that carries the first configuration information is located, and any time domain location of the time domain resource that carries the first configuration information.

Determination of the time domain location of the first time unit set based on the end time domain location of the first configuration information is described below by using the resource division manner shown in FIG. 5 as an example. It should be noted that the foregoing method for determining the time domain location of the first time unit set may also be combined with the resource division manner shown in FIG. 6. For brevity, details are not described here again.

Assuming that an end time domain location C3 of the first configuration information is a time unit 1 in a time unit set 1, and a first offset value K3 is 3, the start time domain location of the first time unit set may be a time unit set in which a target time unit obtained by shifting, by three time units, from the time unit 1 in the time unit set 1 as a start location is located. Referring to FIG. 18(a), a target time unit obtained by shifting, by three time units, from a time unit 1 in a time unit set 1 as a start location is a time unit 0 in a time unit set 2. Therefore, the start time domain location of the first time unit set is the time unit 0 in the time unit set 2.

Assuming that an end time domain location C4 of the first configuration information is a time unit 0 in a time unit set 1, and a first offset value K4 is one time unit set, the start time domain location of the first time unit set may be a target time unit obtained by shifting, by one time unit set, from the time unit 0 in the time unit set 1 as a start location. Referring to FIG. 18(b), a target time unit obtained by shifting, by one time unit set, from a time unit 0 in a time unit set 1 as a start location is a time unit 0 in a time unit set 2. Therefore, the start time domain location of the first time unit set is the time unit 0 in the time unit set 2.

It should be noted that, in embodiments of this application, the time domain location of the first time unit set may also be directly determined based on the time domain resource location of the first configuration information or the control information. For example, the end time domain location of the first configuration information may be directly determined as the start time domain location of the first time unit set. For another example, the start time domain location of the control information may be directly determined as the start time domain location of the first time unit set. For another example, a time unit set in which the first configuration information is located is determined as the first time unit set.

It may be learned based on the foregoing description that the terminal device may determine the first time domain resource based on the first configuration information. However, after receiving the first configuration information, the terminal device needs to process (for example, decode) the first configuration information to obtain the first time domain resource indicated by the first configuration information. If the end time domain location of the first configuration information is relatively close to the start time domain location of the first time domain resource in time domain, for example, the end time domain location of the first configuration information is the start time domain location of the first time domain resource, the terminal device may fail to process the first configuration information in time.

To avoid the foregoing problem, a first time interval may be set between the end time domain location of the first configuration information and the start time domain location of the first time resource, so as to reserve time for the terminal device to process the first configuration information. In this case, the first time interval may also be referred to as a "guard interval (gap)". Certainly, in embodiments of this application, if the time required for the terminal device to process the first configuration information is not considered, no first time interval may be reserved between the end time domain location of the first configuration information and the start time domain location of the first time resource, or the first time interval between the end time domain location of the first configuration information and the start time domain location of the first time resource is 0.

Generally, time required for different terminal devices to process the first configuration information varies. Therefore, to improve appropriateness of configured first time interval, the terminal device may report time required for processing the first configuration information, so that the network device configures the first time interval for the terminal device. Certainly, the foregoing first time interval may also be stipulated in a protocol, which is not limited in embodiments of this application.

In some implementations, the time required for processing the first configuration information that is reported by the terminal device may be used as a minimum value configured for the first time interval. Accordingly, the network device may adjust the end time domain location of the first configuration information and the start time domain location of the first time domain resource based on the minimum value of the first time interval. In some other implementations, the foregoing time for processing the first configuration information that is reported by the terminal device may alternatively be directly used as the first time interval.

A method for determining the start time domain location of the first time domain resource is described below with reference to a determining manner 8 to a determining manner 10 by using an example in which the reference time domain location is the time domain location of the time domain resource occupied by the control information (hereinafter referred to as a "time domain location of the control information").

Determining manner 8: In a case that the time domain location of the control information is the start time domain location of the control information, the start time domain location of the first time domain resource may be determined based on the start time domain location of the control information. In some implementations, the start time domain location of the control information may be directly determined as the start time domain location of the first time domain resource. In some other implementations, the start time domain location of the first time domain resource may be determined based on the start time domain location of the control information and a time unit offset value a. In other words, the start time domain location of the first time domain resource is obtained by shifting, by a time unit, from the start time domain location of the control information as a starting point.

Determining manner 9: In a case that the time domain location of the control information is the end time domain location of the control information, the start time domain location of the first time domain resource may be determined based on the end time domain location of the control information. In some implementations, the end time domain location of the control information may be directly determined as the start time domain location of the first time domain resource. In some other implementations, the start time domain location of the first time domain resource may be determined based on the end time domain location of the control information and a time unit offset value b. In other words, the start time domain location of the first time domain resource is obtained by shifting, by b time units, from the end time domain location of the control information as a starting point.

Determining manner 10: In a case that the time domain location of the control information is a fourth time unit occupied by the control information, the start time domain location of the first time domain resource may be determined based on a time domain location (for example, a start time domain location or an end time domain location) of the fourth time unit. In some implementations, the time domain location of the fourth time unit may be directly determined as the start time domain location of the first time domain resource. In some other implementations, the start time domain location of the first time domain resource may be determined based on the time domain location of the fourth time unit and a time unit offset value c. In other words, the start time domain location of the first time domain resource is obtained by shifting, by c time units, from the time domain location of the fourth time unit as a starting point.

It should be noted that the time domain resource occupied by the control information may include one or more time units. In a case that the control information occupies one time unit, the foregoing fourth time unit may be a time unit occupied by the control information. In a case that the control information occupies a plurality of time units, the foregoing fourth time unit may be one of the plurality of time units occupied by the control information.

A method for determining the end time domain location of the first time domain resource is described below with reference to a determining manner 11 to a determining manner 13 by using an example in which the reference time domain location is the time domain location of the control information.

Determining manner 11: In a case that the time domain location of the control information is the start time domain location of the control information, the end time domain location of the first time domain resource may be determined based on the start time domain location of the control information. In some implementations, the start time domain location of the control information may be directly determined as the end time domain location of the first time domain resource. In some other implementations, the end time domain location of the first time domain resource may be determined based on the start time domain location of the control information and a time unit offset value a'. In other words, the end time domain location of the first time domain resource is obtained by shifting, by a' time units, from the start time domain location of the control information as a starting point.

Determining manner 12: In a case that the time domain location of the control information is the end time domain location of the control information, the end time domain location of the first time domain resource may be determined based on the end time domain location of the control information. In some implementations, the end time domain location of the first time domain resource may be determined based on the end time domain location of the control information and a time unit offset value b'. In other words, the end time domain location of the first time domain resource is obtained by shifting, by b' time units, from the end time domain location of the control information as a starting point.

Determining manner 13: In a case that the time domain location of the control information is a fifth time unit occupied by the control information, the end time domain location of the first time domain resource may be determined based on a time domain location (for example, a start time domain location, an end time domain location, or the like) of the fifth time unit. In some implementations, the end time domain location of the first time domain resource may be determined based on the time domain location of the fifth time unit and a time unit offset value c'. In other words, the end time domain location of the first time domain resource is obtained by shifting, by c' time units, from the time domain location of the first time unit as a starting point.

The time domain resource occupied by the control information may include one or more time units. In a case that the control information occupies one time unit, the fifth time unit may be a time unit occupied by the control information. In a case that the control information occupies a plurality of time units, the fifth time unit may be one of the plurality of time units occupied by the control information.

It should be noted that the shifting involved in the foregoing various determining manners may be understood as shifting in a direction from the earliest to the latest in time domain, or shifting in a direction from the latest to the earliest in time domain, which is not limited in embodiments of this application.

To determine the time domain location of the first time domain resource, any two or all of the determining manner of the start time domain location of the first time domain resource, the determining manner of the end time domain location of the first time domain resource, and the determining manner of the duration of the first time domain resource may be used in combination with each other.

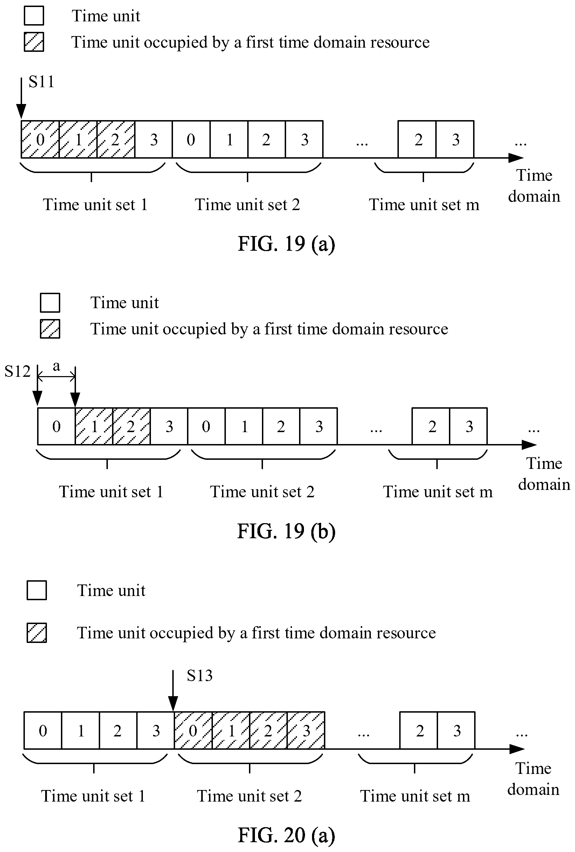

For ease of understanding, the foregoing determining manners 8 to 10 are described below with reference to FIG. 19 to FIG. 21 by using an example in which a resource division manner is as shown in FIG. 5, duration of a first time unit is a preset value, and a shifting direction is a direction from the earliest to the latest in time domain. It should be noted that the foregoing determining manners 8 to 10 may also be applicable to a case in which duration of the first time unit is dynamically indicated, and/or a case in which a resource division manner is as shown in FIG. 6, where manners of determining the time domain location of the first time domain resource in the cases are similar. For brevity, details are not described below again.

Referring to FIG. 19(a), it is assumed that the terminal device and the network device pre-agree upon that duration of a first time domain resource is three time units, and the start time domain location of the control information (that is, a reference time domain location S11) is a start time domain location of a time unit 0 in a time unit set 1. It may be learned based on the foregoing determining manner 8 that a start time domain location of the first time domain resource is the start time domain location of the time unit 0 in the time unit set 1, and time units occupied by the first time domain resource are the time unit 0, a time unit 1, and a time unit 2 in the time unit set 1.

Referring to FIG. 19(b), it is assumed that the terminal device and the network device pre-agree upon that the duration of the first time domain resource is two time units, the start time domain location of the control information (that is, a reference time domain location S 12) is a start time domain location of a time unit 0 in a time unit set 1, and an offset value a is one time unit. It may be learned based on the foregoing determining manner 8 that the start time domain location of the first time domain resource is a time unit obtained by shifting, by one time unit, from the start time domain location of the time unit 0 in the time unit set 1 as a starting point. Therefore, time units occupied by the first time domain resource are a time unit 1 and a time unit 2 in the time unit set 1.

Referring to FIG. 20(a), it is assumed that the terminal device and the network device pre-agree upon that the duration of the first time domain resource is four time units, and the end time domain location of the control information (that is, a reference time domain location S13) is an end time domain location of a time unit 3 in a time unit set 1. It may be learned based on the foregoing determining manner 9 that the start time domain location of the first time domain resource is the end time domain location of the time unit 3 in the time unit set 1, and time units occupied by the first time domain resource are a time unit 0, a time unit 1, a time unit 2, and a time unit 3 in a time unit set 2.

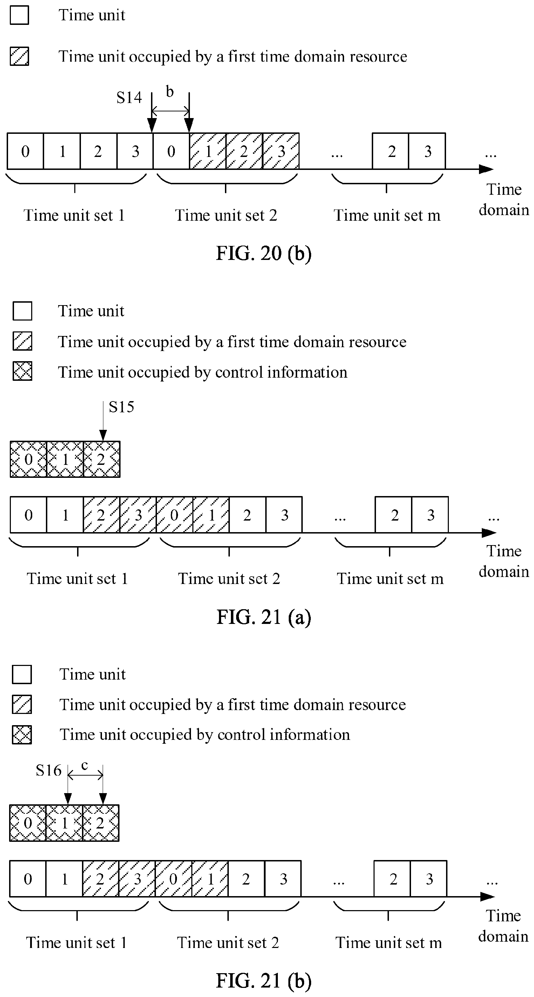

Referring to FIG. 20(b), it is assumed that the terminal device and the network device pre-agree upon that the duration of the first time domain resource is three time units, the end time domain location of the control information (that is, a reference time domain location S14) is an end time domain location of a time unit 3 in a time unit set 1, and an offset value b is one time unit. It may be learned based on the foregoing determining manner 9 that the start time domain location of the first time domain resource is a time unit obtained by shifting, by one time unit, from the end time domain location of the time unit 3 in the time unit set 1 as a starting point. Therefore, time units occupied by the first time domain resource are a time unit 1, a time unit 2, and a time unit 3 in a time unit set 2.

Referring to FIG. 21(a), it is assumed that the terminal device and the network device pre-agree upon that the duration of the first time domain resource is four time units, time units occupied by the control information are a time unit 0, a time unit 1, and a time unit 2 in a time unit set 1, and the foregoing fourth time unit (that is, a reference time domain location S15) is the time unit 2. It may be learned based on the foregoing determining manner 10 that the start time domain location of the first time domain resource is a start time domain location of the time unit 2, and time units occupied by the first time domain resource are the time unit 2 and a time unit 3 in the time unit set 1, and a time unit 0 and a time unit 1 in a time unit set 2.

Referring to FIG. 21(b), it is assumed that the terminal device and the network device pre-agree upon that the duration of the first time domain resource is four time units, time units occupied by the control information are a time unit 0, a time unit 1, and a time unit 2 in a time unit set 1, the foregoing fourth time unit (that is, a reference time domain location S16) is the time unit 1, and an offset value c is one time unit. It may be learned based on the foregoing determining manner 10 that the start time domain location of the first time domain resource is a time unit obtained by shifting, by one time unit, from the start time domain location of the time unit 1 in the time unit set 1 as a starting point. Therefore, time units occupied by the first time domain resource are the time unit 2 and a time unit 3 in the time unit set 1, and a time unit 0 and a time unit 1 in a time unit set 2.

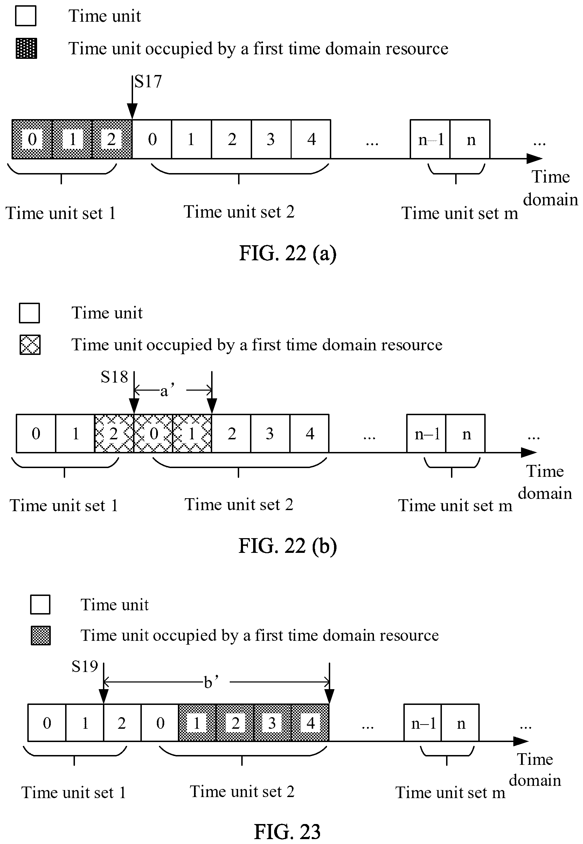

For ease of understanding, the foregoing determining manners 11 to 13 are described below with reference to FIG. 22 to FIG. 24 by using an example in which a resource division manner is as shown in FIG. 6 and duration of a first time unit is a preset value. It should be noted that the foregoing determining manners 11 to 13 may also be applicable to a case in which the duration of the first time unit is dynamically indicated, and/or a case in which a resource division manner is as shown in FIG. 5, where manners of determining the time domain location of the first time domain resource in the cases are similar. For brevity, details are not described below again.

Referring to FIG. 22(a), it is assumed that the terminal device and the network device pre-agree upon that the duration of a first time domain resource is three time units, and the start time domain location of the control information (that is, a reference time domain location S17) is a start time domain location of a time unit 0 in a time unit set 2. It may be learned based on the foregoing determining manner 11 that the end time domain location of the first time domain resource is the start time domain location of the time unit 0 in the time unit set 2, and time units occupied by the first time domain resource are a time unit 0, a time unit 1, and a time unit 2 in a time unit set 1.

Referring to FIG. 22(b), it is assumed that the terminal device and the network device pre-agree upon that the duration of the first time domain resource is three time units, the start time domain location of the control information (that is, a reference time domain location S18) is a start time domain location of a time unit 0 in a time unit set 2, and an offset value a' is two time units. It may be learned based on the foregoing determining manner 11 that the end time domain location of the first time domain resource is a time unit obtained by shifting, by two time units in a direction from the earliest to the latest, from the start time domain location of the time unit 0 in the time unit set 2. Therefore, time units occupied by the first time domain resource are a time unit 2 in a time unit set 1, and the time unit 0 and a time unit 1 in the time unit set 2.

Referring to FIG. 23, it is assumed that the terminal device and the network device pre-agree upon that the duration of the first time domain resource is four time units, the end time domain location of the control information (that is, a reference time domain location S19) is an end time domain location of a time unit 1 in a time unit set 1, and a time unit offset value b' is 6. It may be learned based on the foregoing determining manner 12 that the end time domain location of the first time domain resource is a target time unit, obtained by shifting, by six time units, from the time unit 1 in the time unit set 1 as a starting point, namely an end time domain location of a time unit 4 in a time unit set 2. Therefore, time units occupied by the first time domain resource are a time unit 1, a time unit 2, a time unit 3, and the time unit 4 in the time unit set 2.

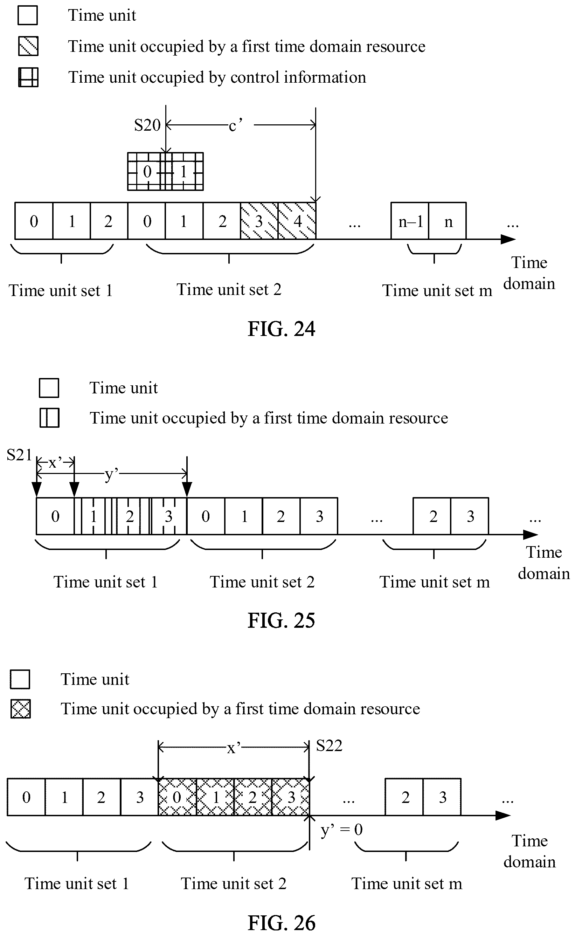

Referring to FIG. 24, it is assumed that the terminal device and the network device pre-agree upon that the duration of the first time domain resource is two time units, time units occupied by the control information are a time unit 0 and a time unit 1 in a time unit set 2, the foregoing fifth time unit (that is, a reference time domain location S20) is a start time domain location of the time unit 1 in the time unit set 2, and a time unit offset value c' is 3. It may be learned based on the foregoing determining manner 13 that the end time domain location of the first time domain resource is a target time unit, obtained by shifting, by three time units, from the start time domain location of the time unit 1 in the time unit set 2 as a starting point, namely a time unit 4 in the time unit set 2. Therefore, time units occupied by the first time domain resource are a time unit 3 and the time unit 4 in the time unit set 2.

The manners of determining the first time domain resource are described above by using the time domain location of the first time domain resource and the duration of the first time domain resource as an example. A manner of determining the first time domain resource is described below by using an example in which this manner is based on the start time domain location of the first time domain resource and the end time domain location of the first time domain resource.

As described above, in some cases, all time units occupied by the first time domain resource may belong to a same time unit set. In some other cases, time units occupied by the first time domain resource may be distributed in different time unit sets. Therefore, in embodiments of this application, the time domain location of the control information may be used as the reference time domain location, to indicate the start time domain location of the first time domain resource and/or the end time domain location of the first time domain resource. A determining manner 14 of the first time domain resource is described below based on the foregoing different indication manners.

Indication manner 3: In a case that time units occupied by the first time domain resource belong to a same time unit set, the start time domain location of the first time domain resource and the end time domain location of the first time domain resource may be both determined based on the time domain location of the control information. In some implementations, the start time domain location of the first time domain resource and the end time domain location of the first time domain resource may be determined by shifting, by an offset x' and an offset y' in terms of time units respectively, from the time domain location of the control information as a start location, where the offset x' is used to determine the start time domain location of the first time domain resource, and the offset y' is used to determine the end time domain location of the first time domain resource. Certainly, in some other implementations, the start time domain location of the first time domain resource and the end time domain location of the first time domain resource may also be represented by indexes of time units. This is not specifically limited in embodiments of this application.

It should be noted that the foregoing offset x' and/or offset y' may be represented by a quantity of time units. Certainly, the foregoing offset x' and/or offset y' may alternatively be represented by a specific time length, which is not limited in embodiments of this application.

In addition, the foregoing offset x' and offset y' may be offsets in time domain locations in a direction from the earliest to the latest, or the foregoing offset x' and offset y' may be offsets in time domain locations in a direction from the latest to the earliest. This is not limited in embodiments of this application.

For example, the resource division manner is as shown in FIG. 5 and a reference time domain location S21 is the start time domain location of the control information. It is assumed that the start time domain location of the control information is a start time domain location of a time unit 0 in a time unit set 1, the offset x' is one time unit, and the offset y' is three time units. Therefore, referring to FIG. 25, the start time domain location of the first time domain resource is a time unit 1 in the time unit set 1, and the end time domain location of the first time domain resource is a time unit 3. Referring to FIG. 25, it is determined based on the determining manner 14 that time units occupied by the first time domain resource are the time unit 1, a time unit 2, and a time unit 3 in the time unit set 1.

For another example, the resource division manner is as shown in FIG. 5 and the reference time domain location S22 is the end time domain location of the control information. It is assumed that the end time domain location of the control information is an end time domain location of a time unit 3 in a time unit set 2, a shifting direction is from the latest to the earliest, the offset x' is three time units, and the offset y' is zero time unit. Therefore, referring to FIG. 26, the start time domain location of the first time domain resource is a time unit 0 in the time unit set 2, and the end time domain location of the first time domain resource is a time unit 3 in the time unit set 2. It is determined based on the determining manner 14 that time units occupied by the first time domain resource are the time unit 0, a time unit 1, a time unit 2, and the time unit 3 in the time unit set 2.

Indication manner 4: In a case that time units occupied by the first time domain resource do not belong to a same time unit set, the start time domain location of the first time domain resource may be determined based on the time domain location of the control information, and the end time domain location of the first time domain resource may be indicated by a time unit set in combination with a time unit. Certainly, the end time domain location of the first time domain resource may be determined based on the time domain location of the control information, and the start time domain location of the first time domain resource may be indicated by a time unit set in combination with a time unit.

In an implementation, assuming that the first configuration information indicates the start time domain location of the first time domain resource by using the first indication information, second indication information may be carried in the first configuration information, to indicate the end time domain location of the first time domain resource. The second indication information may indicate a time unit set and a time unit where the end time domain location of the first time domain resource resides.

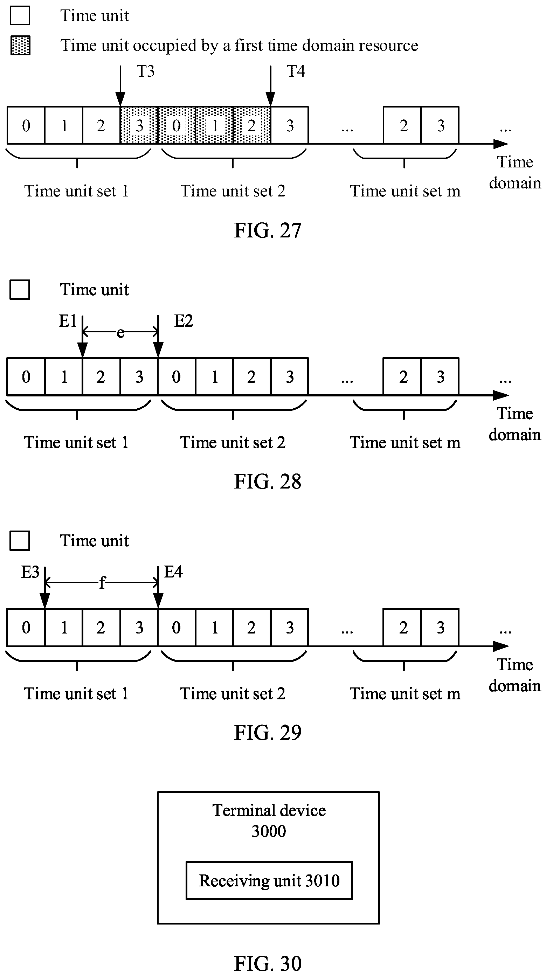

For example, the resource division manner is as shown in FIG. 5. It is assumed that the start time domain location of the control information is an end time domain location of a time unit 1 in a time unit set 1, a time domain location T3 indicated by the first indication information, by using the time domain location of the control information as the reference time domain location, is a start location of a time unit 3 in the time unit set 1, and a time domain location T4 indicated by the second indication information is a time unit 2 in a time unit set 2. Referring to FIG. 27, it is determined based on the determining manner 14 that time units occupied by the first time domain resource are the time unit 3 in the time unit set 1, and a time unit 0, a time unit 1, and the time unit 2 in the time unit set 2.

It may be learned based on the foregoing determining manners described with reference to FIG. 19 to FIG. 27 that the time domain resource occupied by the control information may belong to a same time unit set as the first time domain resource, so that the terminal device may perform backscatter communication in a timely manner by using the first time domain resource after receiving the control information. Certainly, the time domain resource occupied by the control information and the first time domain resource may alternatively belong to different time unit sets respectively (for example, a time unit set to which the time domain resource occupied by the control information belongs is adjacent to a time unit set to which the first time domain resource belongs), so as to reserve time for the terminal device to process the control information.

The method for determining the first time domain resource based on the time domain location of the control information is described above with reference to FIG. 5 to FIG. 27. A method for determining the time domain location of the control information to which an embodiment of this application is applicable is described below.

In some implementations, the time domain location of the control information may be determined based on a first offset value, where the first offset value may be a value of an offset between the time domain location of the control information and a pre-agreed time domain resource location. In some implementations, the foregoing offset value may be represented by a quantity of time units. In some other implementations, the foregoing offset value may alternatively be represented by a quantity of time domain division units 2, which is not limited in embodiments of this application.

The foregoing pre-agreed time domain resource location may be a time domain location of a time domain resource that carries control information in backscatter communication (hereinafter referred to as a "time domain location of the control information"), where the time domain location of the control information may be, for example, one of a start time domain location of the time domain resource that carries the control information (also referred to as a "start time domain location of the control information"), an end time domain resource location of the time domain resource that carries the control information (also referred to as an "end time domain location of the control information"), and any time domain location of the time domain resource that carries the control information.

Determination of the time domain location of the control information based on the end time domain location of the control information is described below by using the resource division manner shown in FIG. 5 as an example. It should be noted that the foregoing method for determining the time domain location of the control information may also be combined with the resource division manner shown in FIG. 6. For brevity, details are not described here again.

Assuming that the pre-agreed time domain location E1 is a time unit 2 in a time unit set 1, a shifting direction is from the earliest to the latest, and a first offset value e is 2, the start time domain location of the control information may be a time unit set in which a target time unit obtained by shifting, by two time units, from the time unit 2 in the time unit set 1 as a start location is located. Referring to FIG. 28, a target time unit obtained by shifting, by two time units, from a time unit 2 in a time unit set 1 as a start location is a time unit 0 in a time unit set 2. Therefore, the start time domain location E2 of the control information is the time unit 0 in the time unit set 2.

Alternatively, the foregoing pre-agreed time domain resource location may be a time domain location of a time domain resource that carries the first configuration information (hereinafter referred to as a "time domain location of the first configuration information"), where the time domain location of the first configuration information may be, for example, one of a start time domain location of the time domain resource that carries the first configuration information (also referred to as a "start time domain location of the first configuration information"), an end time domain resource location of the time domain resource that carries the first configuration information (also referred to as an "end time domain location of the first configuration information"), and any time domain location of the time domain resource that carries the first configuration information.

Determination of the time domain location of the control information based on the end time domain location of the first configuration information is described below by using the resource division manner shown in FIG. 6 as an example. It should be noted that the foregoing method for determining the time domain location of the control information may also be combined with the resource division manner shown in FIG. 5. For brevity, details are not described here again.

Assuming that the pre-agreed time domain location E3 is a time unit 1 in a time unit set 1, a shifting direction is from the earliest to the latest, and a first offset value f is 3, the start time domain location of the control information may be a time unit set in which a target time unit obtained by shifting, by three time units, from the time unit 1 in the time unit set 1 as a start location is located. Referring to FIG. 29, a target time unit obtained by shifting, by three time units, from a time unit 1 in a time unit set 1 as a start location is a time unit 0 in a time unit set 2. Therefore, the start time domain location E4 of the control information is the time unit 0 in the time unit set 2.

It should be noted that, in embodiments of this application, the time domain location of the control information may also be directly determined based on the time domain resource location of the first configuration information or the control information. For example, the end time domain location of the first configuration information may be directly determined as the start time domain location of the control information. For another example, the start time domain location of the control information may be directly determined as the start time domain location of the control information.

It may be learned based on the foregoing description that the terminal device may determine the first time domain resource based on the first configuration information. However, after receiving the first configuration information, the terminal device needs to process (for example, decode) the first configuration information to obtain the first time domain resource indicated by the first configuration information. If the end time domain location of the first configuration information is relatively close to the start time domain location of the first time domain resource in time domain, for example, the end time domain location of the first configuration information is the start time domain location of the first time domain resource, the terminal device may fail to process the first configuration information in time.

To avoid the foregoing problem, a second time interval may be set between the end time domain location of the first configuration information and the start time domain location of the first time resource, so as to reserve time for the terminal device to process the first configuration information. In this case, the second time interval may also be referred to as a "guard interval (gap)". Certainly, in embodiments of this application, if the time required for the terminal device to process the first configuration information is not considered, no second time interval may be reserved between the end time domain location of the first configuration information and the start time domain location of the first time resource, or the second time interval between the end time domain location of the first configuration information and the start time domain location of the first time resource is 0.

Generally, time required for different terminal devices to process the first configuration information varies. Therefore, to improve appropriateness of configured second time interval, the terminal device may report time required for processing the first configuration information, so that the network device configures the second time interval for the terminal device. Certainly, the foregoing second time interval may also be stipulated in a protocol, which is not limited in embodiments of this application.

In some implementations, the time required for processing the first configuration information that is reported by the terminal device may be used as a minimum value configured for the second time interval. Accordingly, the network device may adjust the end time domain location of the first configuration information and the start time domain location of the first time resource based on the minimum value of the second time interval. In some other implementations, the time for processing the first configuration information that is reported by the terminal device may alternatively be directly determined as the second time interval.

Generally, to improve flexibility of configuring the first time domain resource, the network device may configure the first time domain resource for the terminal device in a dynamic configuration manner. In other words, when the terminal device needs to perform backscatter communication, the network device may perform the method process shown in FIG. 7 to configure the first time domain resource for the terminal device. In other words, whenever the terminal device needs to perform backscatter communication, the network device dynamically configures the first time domain resource for the terminal device.

Certainly, to reduce overheads generated by configuring the first time domain resource, the first time domain resource may be configured for the terminal device in a semi-static configuration manner. In other words, the network device sends second configuration information to the terminal device. The second configuration information is used to configure, for the terminal device, a plurality of candidate time domain resources for performing backscatter communication. The foregoing step S710 includes: sending, by the network device, first configuration information to the terminal device, where the first configuration information is used to configure a first time domain resource in the plurality of candidate time domain resources for the terminal device.

It should be noted that, in embodiments of this application, the first time domain resource may be configured for the terminal device in a semi-static configuration manner and a dynamic configuration manner. For example, duration of the first time domain resource may be configured in the semi-static configuration manner, and a start time domain location of the first time domain resource may be indicated in the dynamic configuration manner. For another example, the end time domain location of the first time domain resource may be configured in the semi-static configuration manner, and the start time domain location of the first time domain resource may be indicated in the dynamic configuration manner.

In addition, in some cases, the candidate time domain resources may be configured for the terminal device in a semi-static manner. Accordingly, the first configuration information may not need to carry any indication information (for example, the first indication information or the second indication information). After receiving the first configuration information, the terminal device selects the first time domain resource from the candidate time domain resources according to a preset rule, to perform backscatter communication. In this case, the first configuration information may be understood as being used to trigger the terminal device to select the first time domain resource for performing backscatter communication.

In addition, it may be learned based on the foregoing description that time units occupied by the first time domain resource may belong to a same time unit set, or time units occupied by the first time domain resource may belong to different time unit sets. The foregoing two allocation manners of the first time domain resource may be configured for the terminal device by the network device.

Certainly, the foregoing two allocation manners of the first time domain resource may be configured for the terminal device by the network device by using configuration type indication information. In some implementations, the foregoing allocation manner in which time units included in the first time domain resource belong to a same time unit set may be referred to as a "configuration type 1 (Type1)". The foregoing allocation manner in which time units included in the first time domain resource belong to different time unit sets is referred to as a "configuration type 2 (Type2)". Accordingly, the network device may configure an allocation manner of the first time domain resource for the terminal device by indicating the configuration type 1 or configuration type 2.

As described above, in some cases, the terminal device may occupy a part of time domain resources or all time domain resources in the first time domain resource to perform backscatter communication. In other words, time units in which a time domain resource occupied by the terminal device to perform backscatter communication (hereinafter referred to as "time units for backscatter communication") may be located in a same time unit set, or the time units for backscatter communication may be located in different time unit sets. In other words, an allocation manner of the time units for backscatter communication may be classified into the foregoing two cases.

In some implementations, the network device may indicate, by using third indication information, an allocation manner of the time units for backscatter communication to the terminal device. In other words, the foregoing method further includes: sending, by the network device, third indication information to the terminal device. The third indication information may be classified into the following several cases.

The third indication information is used to indicate that the time units occupied by the backscatter communication are required to belong to a same time unit set. In this case, the time units occupied by the terminal device to perform the backscatter communication cannot be distributed across time unit sets.

The third indication information is used to indicate that the time units occupied by the backscatter communication are allowed not to belong to a same time unit set. In this case, the time units occupied by the terminal device to perform the backscatter communication may be distributed across time unit sets. Certainly, the time units occupied by the terminal device to perform the backscatter communication may also be distributed across time unit sets.

The third indication information is used to indicate that the time units occupied by the backscatter communication belong to a same time unit set. In this case, the time units occupied by the terminal device to perform the backscatter communication are distributed not across time unit sets.

The third indication information is used to indicate that the time units occupied by the backscatter communication do not belong to a same time unit set. In this case, the time units occupied by the terminal device to perform the backscatter communication are distributed across time unit sets.

Certainly, the foregoing two allocation manners of the time units for backscatter communication may alternatively be configured for the terminal device by the network device by using configuration type indication information. In some implementations, the foregoing allocation manner in which the time units for backscatter communication belong to a same time unit set may be referred to as a "configuration type 3 (Type3)". The foregoing allocation manner in which the time units for backscatter communication belong to different time unit sets is referred to as a "configuration type 4 (Type4)". Accordingly, the network device may configure an allocation manner of the first time domain resource for the terminal device by indicating the configuration type 3 or configuration type 4. For example, the network device may indicate the configuration type 3 or the configuration type 4 by using different values of one bit. For another example, the network device may directly give an indication by using type 1 and type2.

In a case in which the time units for backscatter communication belong to a same time unit (for example, the foregoing configuration type 3), the time units occupied by the terminal device to perform the backscatter communication cannot belong to different time unit sets. If the first time domain resource belongs to two different time unit sets, the terminal device can select only time units in one of the time unit sets for performing backscatter communication.

For example, time units occupied by the first time domain resource are a time unit 1 to a time unit 3 in a time unit set 1, and a time unit 0 in a time unit set 2. In this case, in a case of the configuration type 3, the terminal device can occupy only the time units 1 to 3 in the time unit set 1 to perform backscatter communication. Alternatively, the terminal device can occupy only the time unit 0 in the time unit set 2 to perform backscatter communication.

It should be noted that the foregoing third indication information or configuration type indication information may be independent information or may be carried in the first configuration information, which is not limited in embodiments of this application. In addition, the third indication information or the configuration type indication information may be configured in a dynamic configuration manner, or may be configured in a semi-static manner.

In addition, if the time units, for backscatter communication, occupied by the terminal device are not enough to support the terminal device in transmitting all data to be transmitted, the terminal device may first transmit a part of the data to be transmitted, and the terminal device may discard the remaining data to be transmitted, or transmit the remaining data in a next round of backscatter communication.

It may be learned based on the foregoing description that the first time domain resource, the allocation manner of the time units for the backscatter communication, and the allocation manner of the first time domain resource may all be configured in a semi-static configuration or dynamic configuration manner. In embodiments of this application, the foregoing two information configuration manners may be randomly combined.

For example, the allocation manner of the time units for the backscatter communication may be configured in the semi-static configuration manner, and the first time domain resource may be configured for the terminal device in the dynamic configuration manner.

For another example, the allocation manner of the time units for the backscatter communication may be configured in the semi-static configuration manner, and start time domain locations of a plurality of groups of candidate first time unit sets and candidate duration of the first time domain resource may be configured in the semi-static manner. An offset value of the first time unit set is configured for the terminal device in the dynamic configuration manner, and a start time domain location of an effective first time unit set and effective duration of the first time domain resource may be indicated from the start time domain locations of the candidate first time unit sets and the candidate duration respectively in the dynamic configuration manner.

For another example, the allocation manner (also referred to as a "candidate allocation manner") of the time units for the backscatter communication and a plurality of groups of candidate time domain resources may be configured in the semi-static configuration manner. An effective allocation manner is indicated from candidate allocation manners and an effective first time domain resource is selected from the plurality of groups of candidate time domain resources in a dynamic indication manner.

It should be noted that in the semi-static configuration solution, dynamic indication information that is used to indicate parameters such as an effective first time domain resource, an effective allocation manner, and a start time domain location an effective first time unit set may be used for indication by indicating indexes of the effective parameters, or may be used for indicating the effective parameters based on bit mapping, or may be used for indication by indicating code points (code point) of the effective parameters. This is not limited in embodiments of this application.

As described above, in some cases, indication information, used to indicate the time domain location of the first time domain resource, and indication information, used to indicate the duration of the first time domain resource, may be indicated in the first configuration information. In some implementations, the foregoing two types of indication information may be separately encoded. In some other implementations, to reduce a quantity of bits carried in the first configuration information, the foregoing two types of indication information may be jointly encoded. For example, joint coding may be performed in an SLIV manner to indicate the start time domain location and duration of the first time domain resource.

For ease of understanding, a manner of joint coding is described below by using an example in which the time domain location of the first time domain resource is the start time domain location.

It is assumed that the start time domain location of the first time domain resource is a time unit S and the duration of the first time domain resource is represented as L time units. Accordingly, a joint coding result SLIV may be represented as: if (L - 1) ≤ *Lₘₐₓ*, SLIV = N · (*L* - 1) + S; otherwise, if (L - 1) > *Lₘₐₓ,* SLIV = N · (N - *L* + 1) + (N - 1 - S), and 0 ≤ L < N - *S*, where *Lₘₐₓ* represents a maximum value of a quantity of time units included in a time unit set, and N represents a quantity of time units included in a first time unit set.

In embodiments of this application, the network device may configure, for different terminal devices, time domain resources for performing backscatter communication. In some implementations, in a case that the network device determines that no interference occurs between a plurality of terminal devices (for example, there is a large distance between the two terminal devices), some or all of time domain resources, for backscatter communication, configured for the plurality of terminal devices may overlap. Certainly, the network device may alternatively configure time domain resources that do not overlap each other for the plurality of terminal devices, to allow the plurality of terminal devices to perform backscatter communication.

Generally, to improve utilization of time domain resources, the foregoing first time domain resource may partially or fully overlap a time domain resource used for another terminal device to perform uplink communication. Alternatively, the first time domain resource may partially or fully overlap a time domain resource used for the another terminal device to perform downlink communication. Alternatively, the first time domain resource may partially or fully overlap both an uplink time domain resource and a downlink time domain resource for the another terminal device. For example, if the another terminal device includes a first terminal device and a second terminal device, the first time domain resource may partially overlap an uplink time domain resource for the first terminal device, and the first time domain resource may partially overlap a downlink time domain resource for the second terminal device.

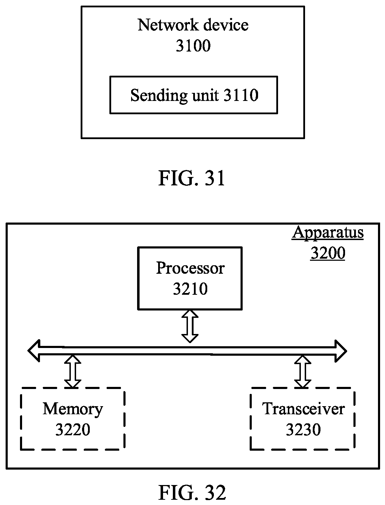

The method embodiments of this application are described in detail above with reference to FIG. 1 to FIG. 29. Apparatus embodiments of this application are described in detail below with reference to FIG. 30 and FIG. 32. It should be understood that the description of the method embodiments corresponds to the description of the apparatus embodiments, and therefore, for parts that are not described in detail, reference may be made to the foregoing method embodiments.

FIG. 30 is a schematic diagram of a terminal device 3000 according to an embodiment of this application. The terminal device 3000 shown in FIG. 30 includes a receiving unit 3010.

The receiving unit 3010 is configured to receive first configuration information sent by a network device, where the first configuration information is used to configure, for the terminal device, a first time domain resource for performing backscatter communication.

In some implementations, the first configuration information is used to configure one or more of following information for the terminal device: a start time domain location of the first time domain resource, an end time domain location of the first time domain resource, and duration of the first time domain resource.

In some implementations, the duration of the first time domain resource is represented based on a quantity of time units included in the first time domain resource.

In some implementations, the time units included in the first time domain resource belong to a same time unit set, or the time units included in the first time domain resource belong to different time unit sets.

In some implementations, the first configuration information includes first indication information, the first indication information is used to indicate a reference time domain location, and the reference time domain location is used to determine a time domain location of the first time domain resource.

In some implementations, the reference time domain location is a time domain location of a first time unit set, and the time domain location of the first time unit set is indicated by the network device, or the time domain location of the first time unit set is pre-agreed upon by the network device and the terminal device.

In some implementations, the first indication information includes a first offset value, and the first indication information indicates, by using the first offset value, a value of an offset between the time domain location of the first time unit set and a pre-agreed time domain resource location.

In some implementations, the pre-agreed time domain resource location is a time domain location of a time domain resource that carries control information in the backscatter communication, and the control information is used to trigger the backscatter communication; or the pre-agreed time domain resource location is a time domain location of a time domain resource that carries the first configuration information.

In some implementations, the time domain location of the first time unit set includes a start time domain location of the first time unit set and/or an end time domain location of the first time unit set.

In some implementations, in a case that the first configuration information is used to configure a start time domain location of the first time domain resource, the time domain location of the first time unit set is the start time domain location of the first time unit set.

In some implementations, in a case that the first configuration information is used to configure a start time domain location of the first time domain resource, the time domain location of the first time unit set is a first time unit in the first time unit set, and the first time unit is any one of time units in the first time unit set.

In some implementations, a start time unit of the first time domain resource belongs to the first time unit set, an end time unit of the first time domain resource belongs to a second time unit set, and the first time unit set is different from the second time unit set.

In some implementations, in a case that the first configuration information is further used to configure an end time domain location of the first time domain resource, second indication information in the first configuration information is used to indicate that the end time domain location of the first time domain resource is a second time unit in the second time unit set, where the second time unit is any one of time units in the second time unit set.

In some implementations, in a case that the first configuration information is used to configure an end time domain location of the first time domain resource, the reference time domain location is an end time domain location of the first time unit set.

In some implementations, in a case that the first configuration information is used to configure an end time domain location of the first time domain resource, the reference time domain location is a third time unit in the first time unit set, and the third time unit is any one of time units in the first time unit set.

In some implementations, in a case that the first configuration information is used to configure an end time domain location of the first time domain resource, the reference time domain location is a start time domain location of the first time unit set.

In some implementations, the first configuration information is carried in control information that triggers the backscatter communication, and the reference time domain location is a time domain location of a time domain resource occupied by the control information.

In some implementations, the time domain location of the time domain resource occupied by the control information includes a start time domain location of the time domain resource occupied by the control information and/or an end time domain location of the time domain resource occupied by the control information.

In some implementations, in a case that the first configuration information is used to configure a start time domain location of the first time domain resource, the reference time domain location is a start time domain location of the time domain resource occupied by the control information.

In some implementations, in a case that the first configuration information is used to configure a start time domain location of the first time domain resource, the reference time domain location is a fourth time unit occupied by the control information.

In some implementations, in a case that the first configuration information is used to configure an end time domain location of the first time domain resource, the reference time domain location is an end time domain location of the time domain resource occupied by the control information.

In some implementations, in a case that the first configuration information is used to configure an end time domain location of the first time domain resource, the reference time domain location is a fifth time unit occupied by the control information.

In some implementations, there is a time interval between an end time domain location of the time domain resource occupied by the control information and a start time domain location of the first time domain resource.

In some implementations, the receiving unit is further configured to: receive second configuration information sent by the network device, where the second configuration information is used to configure, for the terminal device, a plurality of candidate time domain resources for performing the backscatter communication; and receive the first configuration information sent by the network device, where the first configuration information is used to configure the first time domain resource in the plurality of candidate time domain resources for the terminal device.

In some implementations, a processing unit is configured to determine the first time domain resource based on the first configuration information; and a communications unit is configured to occupy a part of resources or all resources in the first time domain resource to perform the backscatter communication.

In some implementations, the receiving unit is further configured to receive third indication information sent by the network device, where the third indication information is used to indicate that time units occupied by the backscatter communication are required to belong to a same time unit set; or the third indication information is used to indicate that time units occupied by the backscatter communication are allowed not to belong to a same time unit set; or the third indication information is used to indicate that time units occupied by the backscatter communication belong to a same time unit set; or the third indication information is used to indicate that time units occupied by the backscatter communication do not belong to a same time unit set.

In some implementations, in a case that the first configuration information includes the start time domain location of the first time domain resource and the duration of the first time domain resource, the start time domain location of the first time domain resource and the duration of the first time domain resource are encoded in a joint coding manner.

FIG. 31 is a schematic diagram of a network device according to an embodiment of this application. The network device 3100 shown in FIG. 31 includes a sending unit 3110.

The sending unit 3110 is configured to send first configuration information to a terminal device, where the first configuration information is used to configure, for the terminal device, a first time domain resource for performing backscatter communication.

In some implementations, the first configuration information is used to configure one or more of following information for the terminal device: a start time domain location of the first time domain resource, an end time domain location of the first time domain resource, and duration of the first time domain resource.

In some implementations, the duration of the first time domain resource is represented based on a quantity of time units included in the first time domain resource.

In some implementations, the time units included in the first time domain resource belong to a same time unit set, or the time units included in the first time domain resource belong to different time unit sets.

In some implementations, the first configuration information includes first indication information, the first indication information is used to indicate a reference time domain location, and the reference time domain location is used to determine a time domain location of the first time domain resource.

In some implementations, the reference time domain location is a time domain location of a first time unit set, and the time domain location of the first time unit set is indicated by the network device, or the time domain location of the first time unit set is pre-agreed upon by the network device and the terminal device.

In some implementations, the first indication information includes a first offset value, and the first indication information indicates, by using the first offset value, a value of an offset between the time domain location of the first time unit set and a pre-agreed time domain resource location.

In some implementations, the pre-agreed time domain resource location is a time domain location of a time domain resource that carries control information in the backscatter communication, and the control information is used to trigger the backscatter communication; or the pre-agreed time domain resource location is a time domain location of a time domain resource that carries the first configuration information.

In some implementations, the time domain location of the first time unit set includes a start time domain location of the first time unit set and/or an end time domain location of the first time unit set.

In some implementations, in a case that the first configuration information is used to configure a start time domain location of the first time domain resource, the time domain location of the first time unit set is the start time domain location of the first time unit set.

In some implementations, in a case that the first configuration information is used to configure a start time domain location of the first time domain resource, the time domain location of the first time unit set is a first time unit in the first time unit set, and the first time unit is any one of time units in the first time unit set.

In some implementations, a start time unit of the first time domain resource belongs to the first time unit set, an end time unit of the first time domain resource belongs to a second time unit set, and the first time unit set is different from the second time unit set.

In some implementations, in a case that the first configuration information is further used to configure an end time domain location of the first time domain resource, second indication information in the first configuration information is used to indicate that the end time domain location of the first time domain resource is a second time unit in the second time unit set, where the second time unit is any one of time units in the second time unit set.

In some implementations, in a case that the first configuration information is used to configure an end time domain location of the first time domain resource, the reference time domain location is an end time domain location of the first time unit set.

In some implementations, in a case that the first configuration information is used to configure an end time domain location of the first time domain resource, the reference time domain location is a third time unit in the first time unit set, and the third time unit is any one of time units in the first time unit set.

In some implementations, the first configuration information is carried in control information that triggers the backscatter communication, and the reference time domain location is a time domain location of a time domain resource occupied by the control information.

In some implementations, the time domain location of the time domain resource occupied by the control information includes a start time domain location of the time domain resource occupied by the control information and/or an end time domain location of the time domain resource occupied by the control information.

In some implementations, in a case that the first configuration information is used to configure a start time domain location of the first time domain resource, the reference time domain location is a start time domain location of the time domain resource occupied by the control information.

In some implementations, in a case that the first configuration information is used to configure a start time domain location of the first time domain resource, the reference time domain location is a fourth time unit occupied by the control information.

In some implementations, in a case that the first configuration information is used to configure an end time domain location of the first time domain resource, the reference time domain location is an end time domain location of the time domain resource occupied by the control information.

In some implementations, in a case that the first configuration information is used to configure an end time domain location of the first time domain resource, the reference time domain location is a fifth time unit occupied by the control information.

In some implementations, there is a time interval between an end time domain location of the time domain resource occupied by the control information and a start time domain location of the first time domain resource.

In some implementations, the sending unit is further configured to: send second configuration information to the terminal device, where the second configuration information is used to configure, for the terminal device, a plurality of candidate time domain resources for performing the backscatter communication; and send the first configuration information to the terminal device, where the first configuration information is used to configure the first time domain resource in the plurality of candidate time domain resources for the terminal device.

In some implementations, the sending unit is further configured to send third indication information to the terminal device, where the third indication information is used to indicate that time units occupied by the backscatter communication are required to belong to a same time unit set; or the third indication information is used to indicate that time units occupied by the backscatter communication are allowed not to belong to a same time unit set; or the third indication information is used to indicate that time units occupied by the backscatter communication belong to a same time unit set; or the third indication information is used to indicate that time units occupied by the backscatter communication do not belong to a same time unit set.

In some implementations, in a case that the first configuration information includes the start time domain location of the first time domain resource and candidate duration of the first time domain resource for the backscatter communication, the start time domain location of the first time domain resource and the candidate duration of the first time domain resource for the backscatter communication are encoded in a joint coding manner.

FIG. 32 is a schematic structural diagram of a communications apparatus according to an embodiment of this application. The dashed lines in FIG. 32 indicate that the unit or module is optional. The apparatus 3200 may be used to implement the method described in the foregoing method embodiments. The apparatus 3200 may be a chip, a terminal device, or a network device.

The apparatus 3200 may include one or more processors 3210. The processor 3210 may support the apparatus 3200 in implementing the methods described in the foregoing method embodiments. The processor 3210 may be a general-purpose processor or a dedicated processor. For example, the processor may be a central processing unit (central processing unit, CPU). Alternatively, the processor may be another general-purpose processor, a digital signal processor (digital signal processor, DSP), an application-specific integrated circuit (application specific integrated circuit, ASIC), a field-programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

The apparatus 3200 may further include one or more memories 3220. The memory 3220 stores a program, where the program may be executed by the processor 3210, to cause the processor 3210 to perform the methods described in the foregoing method embodiments. The memory 3220 may be independent of the processor 3210 or may be integrated into the processor 3210.

The apparatus 3200 may further include a transceiver 3232. The processor 3210 may communicate with another device or chip by using the transceiver 3232. For example, the processor 3210 may send data to and receive data from another device or chip by using the transceiver 3232.

An embodiment of this application further provides a computer-readable storage medium for storing a program. The computer-readable storage medium may be applied to the terminal or the network device provided in the embodiments of this application, and the program causes a computer to execute the methods performed by the terminal or the network device in various embodiments of this application.

An embodiment of this application further provides a computer program product. The computer program product includes a program. The computer program product may be applied to the terminal or the network device provided in embodiments of this application, and the program causes a computer to execute the methods performed by the terminal or the network device in various embodiments of this application.

An embodiment of this application further provides a computer program. The computer program may be applied to the terminal or the network device provided in embodiments of this application, and the computer program causes a computer to execute the methods performed by the terminal or the network device in various embodiments of this application.

It should be understood that the terms "system" and "network" in this application may be used interchangeably. In addition, the terms used in this application are only used to illustrate specific embodiments of this application, but are not intended to limit this application. The terms "first", "second", "third", "fourth", and the like in the specification, claims, and drawings of this application are used for distinguishing different objects from each other, rather than defining a specific order. In addition, the terms "include" and "have" and any variations thereof are intended to cover a non-exclusive inclusion.

In embodiments of this application, the "indication" mentioned in embodiments of this application may be a direct indication or an indirect indication, or indicate an association. For example, if A indicates B, it may mean that A directly indicates B, for example, B can be obtained from A. Alternatively, it may mean that A indicates B indirectly, for example, A indicates C, and B can be obtained from C. Alternatively, it may mean that there is an association between A and B.

In embodiments of this application, "B that is corresponding to A" means that B is associated with A, and B may be determined based on A. However, it should also be understood that, determining B based on A does not mean determining B based only on A, but instead B may be determined based on A and/or other information.

In embodiments of this application, the term "corresponding" may mean that there is a direct or indirect correspondence between two elements, or that there is an association between two elements, or that there is a relationship of "indicating" and "being indicated", "configuring" and "being configured", or the like.

In embodiments of this application, the "predefining" and "pre-configuration" may be implemented in a manner in which corresponding codes, a table, or other related information used for indication is pre-stored in a device (for example, including the terminal device and the network device), and a specific implementation thereof is not limited in this application. For example, predefining may refer to being defined in a protocol.

In embodiments of this application, the "protocol" may refer to a standard protocol in the communication field, which may include, for example, an LTE protocol, an NR protocol, and a related protocol applied to a future communications system, and this application is not limited in this regard.

In embodiments of this application, the term "and/or" is merely an association relationship that describes associated objects, and represents that there may be three relationships. For example, A and/or B may represent three cases: only A exists, both A and B exist, and only B exists. In addition, the character "/" in this specification generally indicates an "or" relationship between the associated objects.

In embodiments of this application, sequence numbers of the foregoing processes do not mean execution sequences. The execution sequences of the processes should be determined according to functions and internal logic of the processes, and should not be construed as any limitation on the implementation processes of embodiments of this application.

In the several embodiments provided in this application, it should be understood that the disclosed system, apparatus, and method may be implemented in another manner. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatus or units may be implemented in electronic, mechanical, or other forms.

The units described as separate components may be or may not be physically separated, and the components displayed as units may be or may not be physical units, that is, may be located in one place or distributed on a plurality of network units. Some or all of the units may be selected according to actual needs to achieve the objective of the solutions of the embodiments.

In addition, function units in embodiments of this application may be integrated into one processing unit, or each of the units may exist alone physically, or two or more units may be integrated into one unit.

All or some of the foregoing embodiments may be implemented by using software, hardware, firmware, or any combination thereof. When the software is used to implement embodiments, all or some of embodiments may be implemented in a form of a computer program product. The computer program product includes one or more computer instructions. When the computer program instructions are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (such as a coaxial cable, an optical fiber, and a digital subscriber line (digital subscriber line, DSL)) manner or a wireless (such as infrared, wireless, and microwave) manner. The computer-readable storage medium may be any usable medium readable by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state drive (solid state disk, SSD)), or the like.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for determining a time domain resource, comprising:
receiving, by a terminal device, first configuration information sent by a network device, wherein the first configuration information is used to configure, for the terminal device, a first time domain resource for performing backscatter communication.

2. The method according to claim 1, wherein the first configuration information is used to configure one or more of following information for the terminal device: a start time domain location of the first time domain resource, an end time domain location of the first time domain resource, and duration of the first time domain resource.

3. The method according to claim 2, wherein the duration of the first time domain resource is represented based on a quantity of time units comprised in the first time domain resource.

4. The method according to any one of claims 1 to 3, wherein time units comprised in the first time domain resource belong to a same time unit set; or
time units comprised in the first time domain resource belong to different time unit sets.

5. The method according to claim 4, wherein the first configuration information comprises first indication information, the first indication information is used to indicate a reference time domain location, and the reference time domain location is used to determine a time domain location of the first time domain resource.

6. The method according to claim 5, wherein the reference time domain location is a time domain location of a first time unit set, and the time domain location of the first time unit set is indicated by the network device, or the time domain location of the first time unit set is pre-agreed upon by the network device and the terminal device.

7. The method according to claim 6, wherein the first indication information comprises a first offset value, and the first indication information indicates, by using the first offset value, a value of an offset between the time domain location of the first time unit set and a pre-agreed time domain resource location.

8. The method according to claim 7, wherein the pre-agreed time domain resource location is a time domain location of a time domain resource that carries control information in the backscatter communication, and the control information is used to trigger the backscatter communication; or
the pre-agreed time domain resource location is a time domain location of a time domain resource that carries the first configuration information.

9. The method according to any one of claims 6 to 8, wherein the time domain location of the first time unit set comprises a start time domain location of the first time unit set and/or an end time domain location of the first time unit set.

10. The method according to claim 9, wherein in a case that the first configuration information is used to configure a start time domain location of the first time domain resource, the time domain location of the first time unit set is the start time domain location of the first time unit set.

11. The method according to any one of claims 6 to 8, wherein in a case that the first configuration information is used to configure a start time domain location of the first time domain resource, the time domain location of the first time unit set is a first time unit in the first time unit set, and the first time unit is any one of time units in the first time unit set.

12. The method according to any one of claims 6 to 11, wherein a start time unit of the first time domain resource belongs to the first time unit set, an end time unit of the first time domain resource belongs to a second time unit set, and the first time unit set is different from the second time unit set.

13. The method according to claim 12, wherein in a case that the first configuration information is further used to configure an end time domain location of the first time domain resource, second indication information in the first configuration information is used to indicate that the end time domain location of the first time domain resource is a second time unit in the second time unit set, wherein the second time unit is any one of time units in the second time unit set.

14. The method according to any one of claims 6 to 11, wherein in a case that the first configuration information is used to configure an end time domain location of the first time domain resource, the reference time domain location is an end time domain location of the first time unit set.

15. The method according to any one of claims 6 to 8, wherein in a case that the first configuration information is used to configure an end time domain location of the first time domain resource, the reference time domain location is a third time unit in the first time unit set, and the third time unit is any one of time units in the first time unit set.

16. The method according to any one of claims 6 to 11, wherein in a case that the first configuration information is used to configure an end time domain location of the first time domain resource, the reference time domain location is a start time domain location of the first time unit set.

17. The method according to claim 5, wherein the first configuration information is carried in control information that triggers the backscatter communication, and the reference time domain location is a time domain location of a time domain resource occupied by the control information.

18. The method according to claim 17, wherein the time domain location of the time domain resource occupied by the control information comprises a start time domain location of the time domain resource occupied by the control information and/or an end time domain location of the time domain resource occupied by the control information.

19. The method according to claim 17 or 18, wherein in a case that the first configuration information is used to configure a start time domain location of the first time domain resource, the reference time domain location is a start time domain location of the time domain resource occupied by the control information.

20. The method according to claim 17, wherein in a case that the first configuration information is used to configure a start time domain location of the first time domain resource, the reference time domain location is a fourth time unit occupied by the control information.

21. The method according to any one of claims 17 to 20, wherein in a case that the first configuration information is used to configure an end time domain location of the first time domain resource, the reference time domain location is an end time domain location of the time domain resource occupied by the control information.

22. The method according to any one of claims 17 to 20, wherein in a case that the first configuration information is used to configure an end time domain location of the first time domain resource, the reference time domain location is a fifth time unit occupied by the control information.

23. The method according to any one of claims 17 to 22, wherein there is a time interval between an end time domain location of the time domain resource occupied by the control information and a start time domain location of the first time domain resource.

24. The method according to any one of claims 1 to 23, wherein the method further comprises:
receiving, by the terminal device, second configuration information sent by the network device, wherein the second configuration information is used to configure, for the terminal device, a plurality of candidate time domain resources for performing the backscatter communication; and
the receiving, by a terminal device, first configuration information sent by a network device comprises:
receiving, by the terminal device, the first configuration information sent by the network device, wherein the first configuration information is used to configure the first time domain resource in the plurality of candidate time domain resources for the terminal device.

25. The method according to any one of claims 1 to 24, wherein the method further comprises:
determining, by the terminal device, the first time domain resource based on the first configuration information; and
occupying, by the terminal device, a part of resources or all resources in the first time domain resource to perform the backscatter communication.

26. The method according to any one of claims 1 to 25, wherein the method further comprises:
receiving, by the terminal device, third indication information sent by the network device, wherein the third indication information is used to indicate that time units occupied by the backscatter communication are required to belong to a same time unit set, or
the third indication information is used to indicate that time units occupied by the backscatter communication are allowed not to belong to a same time unit set; or
the third indication information is used to indicate that time units occupied by the backscatter communication belong to a same time unit set; or
the third indication information is used to indicate that time units occupied by the backscatter communication do not belong to a same time unit set.

27. The method according to any one of claims 2 to 26, wherein in a case that the first configuration information comprises the start time domain location of the first time domain resource and the duration of the first time domain resource, the start time domain location of the first time domain resource and the duration of the first time domain resource are encoded in a joint coding manner.

28. A method for determining a time domain resource, comprising:
sending, by a network device, first configuration information to a terminal device, wherein the first configuration information is used to configure, for the terminal device, a first time domain resource for performing backscatter communication.

29. The method according to claim 28, wherein the first configuration information is used to configure one or more of following information for the terminal device: a start time domain location of the first time domain resource, an end time domain location of the first time domain resource, and duration of the first time domain resource.

30. The method according to claim 29, wherein the duration of the first time domain resource is represented based on a quantity of time units comprised in the first time domain resource.

31. The method according to any one of claims 28 to 30, wherein time units comprised in the first time domain resource belong to a same time unit set; or
time units comprised in the first time domain resource belong to different time unit sets.

32. The method according to claim 31, wherein the first configuration information comprises first indication information, the first indication information is used to indicate a reference time domain location, and the reference time domain location is used to determine a time domain location of the first time domain resource.

33. The method according to claim 32, wherein the reference time domain location is a time domain location of a first time unit set, and the time domain location of the first time unit set is indicated by the network device, or the time domain location of the first time unit set is pre-agreed upon by the network device and the terminal device.

34. The method according to claim 33, wherein the first indication information comprises a first offset value, and the first indication information indicates, by using the first offset value, a value of an offset between the time domain location of the first time unit set and a pre-agreed time domain resource location.

35. The method according to claim 34, wherein the pre-agreed time domain resource location is a time domain location of a time domain resource that carries control information in the backscatter communication, and the control information is used to trigger the backscatter communication; or
the pre-agreed time domain resource location is a time domain location of a time domain resource that carries the first configuration information.

36. The method according to any one of claims 33 to 35, wherein the time domain location of the first time unit set comprises a start time domain location of the first time unit set and/or an end time domain location of the first time unit set.

37. The method according to any one of claims 33 to 36, wherein in a case that the first configuration information is used to configure a start time domain location of the first time domain resource, the time domain location of the first time unit set is a start time domain location of the first time unit set.

38. The method according to any one of claims 33 to 35, wherein in a case that the first configuration information is used to configure a start time domain location of the first time domain resource, the time domain location of the first time unit set is a first time unit in the first time unit set, and the first time unit is any one of time units in the first time unit set.

39. The method according to any one of claims 33 to 38, wherein a start time unit of the first time domain resource belongs to the first time unit set, an end time unit of the first time domain resource belongs to a second time unit set, and the first time unit set is different from the second time unit set.

40. The method according to claim 39, wherein in a case that the first configuration information is further used to configure an end time domain location of the first time domain resource, second indication information in the first configuration information is used to indicate that the end time domain location of the first time domain resource is a second time unit in the second time unit set, wherein the second time unit is any one of time units in the second time unit set.

41. The method according to any one of claims 33 to 38, wherein in a case that the first configuration information is used to configure an end time domain location of the first time domain resource, the reference time domain location is an end time domain location of the first time unit set.

42. The method according to any one of claims 33 to 35, wherein in a case that the first configuration information is used to configure an end time domain location of the first time domain resource, the reference time domain location is a third time unit in the first time unit set, and the third time unit is any one of time units in the first time unit set.

43. The method according to any one of claims 33 to 38, wherein in a case that the first configuration information is used to configure an end time domain location of the first time domain resource, the reference time domain location is a start time domain location of the first time unit set.

44. The method according to claim 32, wherein the first configuration information is carried in control information that triggers the backscatter communication, and the reference time domain location is a time domain location of a time domain resource occupied by the control information.

45. The method according to claim 44, wherein the time domain location of the time domain resource occupied by the control information comprises a start time domain location of the time domain resource occupied by the control information and/or an end time domain location of the time domain resource occupied by the control information.

46. The method according to claim 44 or 45, wherein in a case that the first configuration information is used to configure a start time domain location of the first time domain resource, the reference time domain location is a start time domain location of the time domain resource occupied by the control information.

47. The method according to claim 44, wherein in a case that the first configuration information is used to configure a start time domain location of the first time domain resource, the reference time domain location is a fourth time unit occupied by the control information.

48. The method according to any one of claims 44 to 46, wherein in a case that the first configuration information is used to configure an end time domain location of the first time domain resource, the reference time domain location is an end time domain location of the time domain resource occupied by the control information.

49. The method according to claim 44, wherein in a case that the first configuration information is used to configure an end time domain location of the first time domain resource, the reference time domain location is a fifth time unit occupied by the control information.

50. The method according to any one of claims 44 to 49, wherein there is a time interval between an end time domain location of the time domain resource occupied by the control information and a start time domain location of the first time domain resource.

51. The method according to any one of claims 28 to 50, wherein the method further comprises:
sending, by the network device, second configuration information to the terminal device, wherein the second configuration information is used to configure, for the terminal device, a plurality of candidate time domain resources for performing the backscatter communication; and
the sending, by a network device, first configuration information to a terminal device comprises:
sending, by the network device, the first configuration information to the terminal device, wherein the first configuration information is used to configure the first time domain resource in the plurality of candidate time domain resources for the terminal device.

52. The method according to any one of claims 28 to 51, wherein the method further comprises:
sending, by the network device, third indication information to the terminal device, wherein the third indication information is used to indicate that time units occupied by the backscatter communication are required to belong to a same time unit set, or
the third indication information is used to indicate that time units occupied by the backscatter communication are allowed not to belong to a same time unit set; or
the third indication information is used to indicate that time units occupied by the backscatter communication belong to a same time unit set; or
the third indication information is used to indicate that time units occupied by the backscatter communication do not belong to a same time unit set.

53. The method according to any one of claims 29 to 52, wherein in a case that the first configuration information comprises the start time domain location of the first time domain resource and candidate duration of the first time domain resource for the backscatter communication, the start time domain location of the first time domain resource and the candidate duration of the first time domain resource for the backscatter communication are encoded in a joint coding manner.

54. A terminal device, comprising:
a receiving unit, configured to receive first configuration information sent by a network device, wherein the first configuration information is used to configure, for the terminal device, a first time domain resource for performing backscatter communication.

55. The terminal device according to claim 54, wherein the first configuration information is used to configure one or more of following information for the terminal device: a start time domain location of the first time domain resource, an end time domain location of the first time domain resource, and duration of the first time domain resource.

56. The terminal device according to claim 55, wherein the duration of the first time domain resource is represented based on a quantity of time units comprised in the first time domain resource.

57. The terminal device according to any one of claims 54 to 56, wherein time units comprised in the first time domain resource belong to a same time unit set; or
time units comprised in the first time domain resource belong to different time unit sets.

58. The terminal device according to claim 57, wherein the first configuration information comprises first indication information, the first indication information is used to indicate a reference time domain location, and the reference time domain location is used to determine a time domain location of the first time domain resource.

59. The terminal device according to claim 58, wherein the reference time domain location is a time domain location of a first time unit set, and the time domain location of the first time unit set is indicated by the network device, or the time domain location of the first time unit set is pre-agreed upon by the network device and the terminal device.

60. The terminal device according to claim 59, wherein the first indication information comprises a first offset value, and the first indication information indicates, by using the first offset value, a value of an offset between the time domain location of the first time unit set and a pre-agreed time domain resource location.

61. The terminal device according to claim 60, wherein the pre-agreed time domain resource location is a time domain location of a time domain resource that carries control information in the backscatter communication, and the control information is used to trigger the backscatter communication; or
the pre-agreed time domain resource location is a time domain location of a time domain resource that carries the first configuration information.

62. The terminal device according to any one of claims 59 to 61, wherein the time domain location of the first time unit set comprises a start time domain location of the first time unit set and/or an end time domain location of the first time unit set.

63. The terminal device according to claim 62, wherein in a case that the first configuration information is used to configure a start time domain location of the first time domain resource, the time domain location of the first time unit set is the start time domain location of the first time unit set.

64. The terminal device according to any one of claims 59 to 61, wherein in a case that the first configuration information is used to configure a start time domain location of the first time domain resource, the time domain location of the first time unit set is a first time unit in the first time unit set, and the first time unit is any one of time units in the first time unit set.

65. The terminal device according to any one of claims 59 to 64, wherein a start time unit of the first time domain resource belongs to the first time unit set, an end time unit of the first time domain resource belongs to a second time unit set, and the first time unit set is different from the second time unit set.

66. The terminal device according to any one of claims 59 to 61, wherein in a case that the first configuration information is further used to configure an end time domain location of the first time domain resource, second indication information in the first configuration information is used to indicate that the end time domain location of the first time domain resource is a second time unit in the second time unit set, wherein the second time unit is any one of time units in the second time unit set.

67. The terminal device according to any one of claims 59 to 64, wherein in a case that the first configuration information is used to configure an end time domain location of the first time domain resource, the reference time domain location is an end time domain location of the first time unit set.

68. The terminal device according to any one of claims 59 to 61, wherein in a case that the first configuration information is used to configure an end time domain location of the first time domain resource, the reference time domain location is a third time unit in the first time unit set, and the third time unit is any one of time units in the first time unit set.

69. The terminal device according to any one of claims 59 to 64, wherein in a case that the first configuration information is used to configure an end time domain location of the first time domain resource, the reference time domain location is a start time domain location of the first time unit set.

70. The terminal device according to claim 58, wherein the first configuration information is carried in control information that triggers the backscatter communication, and the reference time domain location is a time domain location of a time domain resource occupied by the control information.

71. The terminal device according to claim 70, wherein the time domain location of the time domain resource occupied by the control information comprises a start time domain location of the time domain resource occupied by the control information and/or an end time domain location of the time domain resource occupied by the control information.

72. The terminal device according to claim 70 or 71, wherein in a case that the first configuration information is used to configure a start time domain location of the first time domain resource, the time domain location of the time domain resource occupied by the control information is a start time domain location of the time domain resource occupied by the control information.

73. The terminal device according to claim 70, wherein in a case that the first configuration information is used to configure a start time domain location of the first time domain resource, the reference time domain location is a fourth time unit occupied by the control information.

74. The terminal device according to any one of claims 70 to 73, wherein in a case that the first configuration information is used to configure an end time domain location of the first time domain resource, the reference time domain location is an end time domain location of the time domain resource occupied by the control information.

75. The terminal device according to any one of claims 70 to 73, wherein in a case that the first configuration information is used to configure an end time domain location of the first time domain resource, the reference time domain location is a fifth time unit occupied by the control information.

76. The terminal device according to any one of claims 70 to 75, wherein there is a time interval between an end time domain location of the time domain resource occupied by the control information and a start time domain location of the first time domain resource.

77. The terminal device according to any one of claims 54 to 76, wherein
the receiving unit is further configured to: receive second configuration information sent by the network device, wherein the second configuration information is used to configure, for the terminal device, a plurality of candidate time domain resources for performing the backscatter communication; and
receive the first configuration information sent by the network device, wherein the first configuration information is used to configure the first time domain resource in the plurality of candidate time domain resources for the terminal device.

78. The terminal device according to any one of claims 54 to 77, comprising:
a processing unit, configured to determine the first time domain resource based on the first configuration information; and
a communications unit, configured to occupy a part of resources or all resources in the first time domain resource to perform the backscatter communication.

79. The terminal device according to any one of claims 54 to 78, wherein
the receiving unit is further configured to receive third indication information sent by the network device, wherein the third indication information is used to indicate that time units occupied by the backscatter communication are required to belong to a same time unit set, or
the third indication information is used to indicate that time units occupied by the backscatter communication are allowed not to belong to a same time unit set; or
the third indication information is used to indicate that time units occupied by the backscatter communication belong to a same time unit set; or
the third indication information is used to indicate that time units occupied by the backscatter communication do not belong to a same time unit set.

80. The terminal device according to any one of claims 55 to 79, wherein in a case that the first configuration information comprises the start time domain location of the first time domain resource and the duration of the first time domain resource, the start time domain location of the first time domain resource and the duration of the first time domain resource are encoded in a joint coding manner.

81. A network device, comprising:
a sending unit, configured to send first configuration information to a terminal device, wherein the first configuration information is used to configure, for the terminal device, a first time domain resource for performing backscatter communication.

82. The network device according to claim 81, wherein the first configuration information is used to configure one or more of following information for the terminal device: a start time domain location of the first time domain resource, an end time domain location of the first time domain resource, and duration of the first time domain resource.

83. The network device according to claim 82, wherein the duration of the first time domain resource is represented based on a quantity of time units comprised in the first time domain resource.

84. The network device according to any one of claims 81 to 83, wherein time units comprised in the first time domain resource belong to a same time unit set; or
time units comprised in the first time domain resource belong to different time unit sets.

85. The network device according to claim 84, wherein the first configuration information comprises first indication information, the first indication information is used to indicate a reference time domain location, and the reference time domain location is used to determine a time domain location of the first time domain resource.

86. The network device according to claim 85, wherein the reference time domain location is a time domain location of a first time unit set, and the time domain location of the first time unit set is indicated by the network device, or the time domain location of the first time unit set is pre-agreed upon by the network device and the terminal device.

87. The network device according to claim 86, wherein the first indication information comprises a first offset value, and the first indication information indicates, by using the first offset value, a value of an offset between the time domain location of the first time unit set and a pre-agreed time domain resource location.

88. The network device according to claim 87, wherein the pre-agreed time domain resource location is a time domain location of a time domain resource that carries control information in the backscatter communication; or
the pre-agreed time domain resource location is a time domain location of a time domain resource that carries the first configuration information.

89. The network device according to any one of claims 86 to 88, wherein the time domain location of the first time unit set comprises a start time domain location of the first time unit set and/or an end time domain location of the first time unit set.

90. The network device according to claim 89, wherein in a case that the first configuration information is used to configure a start time domain location of the first time domain resource, the time domain location of the first time unit set is the start time domain location of the first time unit set.

91. The network device according to any one of claims 86 to 88, wherein in a case that the first configuration information is used to configure a start time domain location of the first time domain resource, the time domain location of the first time unit set is a first time unit in the first time unit set, and the first time unit is any one of time units in the first time unit set.

92. The network device according to any one of claims 86 to 91, wherein a start time unit of the first time domain resource belongs to the first time unit set, an end time unit of the first time domain resource belongs to a second time unit set, and the first time unit set is different from the second time unit set.

93. The network device according to claim 92, wherein in a case that the first configuration information is further used to configure an end time domain location of the first time domain resource, second indication information in the first configuration information is used to indicate that the end time domain location of the first time domain resource is a second time unit in the second time unit set, wherein the second time unit is any one of time units in the second time unit set.

94. The network device according to any one of claims 86 to 91, wherein in a case that the first configuration information is used to configure an end time domain location of the first time domain resource, the reference time domain location is an end time domain location of the first time unit set.

95. The network device according to any one of claims 86 to 88, wherein in a case that the first configuration information is used to configure an end time domain location of the first time domain resource, the reference time domain location is a third time unit in the first time unit set, and the third time unit is any one of time units in the first time unit set.

96. The network device according to any one of claims 86 to 91, wherein in a case that the first configuration information is used to configure an end time domain location of the first time domain resource, the reference time domain location is a start time domain location of the first time unit set.

97. The network device according to claim 85, wherein the first configuration information is carried in control information that triggers the backscatter communication, and the reference time domain location is a time domain location of a time domain resource occupied by the control information.

98. The network device according to claim 97, wherein the time domain location of the time domain resource occupied by the control information comprises a start time domain location of the time domain resource occupied by the control information and/or an end time domain location of the time domain resource occupied by the control information.

99. The network device according to claim 97 or 98, wherein in a case that the first configuration information is used to configure a start time domain location of the first time domain resource, the reference time domain location is a start time domain location of the time domain resource occupied by the control information.

100. The network device according to claim 97, wherein in a case that the first configuration information is used to configure a start time domain location of the first time domain resource, the reference time domain location is a fourth time unit occupied by the control information.

101. The network device according to any one of claims 97 to 100, wherein in a case that the first configuration information is used to configure an end time domain location of the first time domain resource, the reference time domain location is an end time domain location of a time domain resource occupied by the control information.

102. The network device according to claim 97, wherein in a case that the first configuration information is used to configure an end time domain location of the first time domain resource, the reference time domain location is a fifth time unit occupied by the control information.

103. The network device according to any one of claims 97 to 102, wherein there is a time interval between an end time domain location of the time domain resource occupied by the control information and a start time domain location of the first time domain resource.

104. The network device according to any one of claims 81 to 103, wherein
the sending unit is further configured to: send second configuration information to the terminal device, wherein the second configuration information is used to configure, for the terminal device, a plurality of candidate time domain resources for performing the backscatter communication; and
send the first configuration information to the terminal device, wherein the first configuration information is used to configure the first time domain resource in the plurality of candidate time domain resources for the terminal device.

105. The network device according to any one of claims 81 to 104, wherein
the sending unit is further configured to send third indication information to the terminal device, wherein the third indication information is used to indicate that time units occupied by the backscatter communication are required to belong to a same time unit set, or
the third indication information is used to indicate that time units occupied by the backscatter communication are allowed not to belong to a same time unit set; or
the third indication information is used to indicate that time units occupied by the backscatter communication belong to a same time unit set; or
the third indication information is used to indicate that time units occupied by the backscatter communication do not belong to a same time unit set.

106. The network device according to any one of claims 82 to 105, wherein in a case that the first configuration information comprises the start time domain location of the first time domain resource and candidate duration of the first time domain resource for the backscatter communication, the start time domain location of the first time domain resource and the candidate duration of the first time domain resource for the backscatter communication are encoded in a joint coding manner.

107. A terminal device, comprising a memory, a processor, and a communications interface, wherein the memory is configured to store a program, and the processor is configured to invoke the program in the memory, to cause the terminal to execute the method according to any one of claims 1 to 27.

108. A network device, comprising a memory, a processor, and a communications interface, wherein the memory is configured to store a program, and the processor is configured to invoke the program in the memory, to cause the terminal to execute the method according to any one of claims 28 to 53.

109. An apparatus, comprising a processor, configured to invoke a program from a memory to execute the method according to any one of claims 1 to 27.

110. An apparatus, comprising a processor, configured to invoke a program from a memory to execute the method according to any one of claims 28 to 53.

111. A chip, comprising a processor configured to invoke a program from a memory to cause a device installed with the chip to execute the method according to any one of claims 1 to 27.

112. A chip, comprising a processor configured to invoke a program from a memory to cause a device installed with the chip to execute the method according to any one of claims 28 to 53.

113. A computer-readable storage medium, wherein the computer-readable storage medium stores a program, and the program causes a computer to execute the method according to any one of claims 1 to 27.

114. A computer-readable storage medium, wherein the computer-readable storage medium stores a program, and the program causes a computer to execute the method according to any one of claims 28 to 53.

115. A computer program product, comprising a program, wherein the program causes a computer to execute the method according to any one of claims 1 to 27.

116. A computer program product, comprising a program, wherein the program causes a computer to execute the method according to any one of claims 28 to 53.

117. A computer program, wherein the computer program causes a computer to perform the method according to any one of claims 1 to 27.

118. A computer program, wherein the computer program causes a computer to perform the method according to any one of claims 28 to 53.
